# EUROPÄISCHE PATENTANMELDUNG

(11) **EP 2 892 029 A1**
(43) Veröffentlichungstag der Anmeldung: **08.07.2015**
(21) Anmeldenummer: 14200047.0
(22) Anmeldetag: 23.12.2014
(51) Int. Cl.: G07B 15/02, G06Q 30/04, G06Q 20/00

(54) **Internetbasierte Bezahlung von Parkgebühren**

(30) Priorität: 28.12.2013 DE 102013114935
(71) Anmelder: Deutsche Telekom AG, 53113 Bonn (DE)
(72) Erfinder: Pötzl, Manfred, 89075 Ulm (DE)
(74) Vertreter: Brandt & Nern Patentanwälte

(57) **Zusammenfassung**

In einer mit Kontrolleinrichtungen (4, 5) ausgestatteten Parkanlage erfolgen die Zu- und Ausfahrtkontrolle sowie die Bezahlung erhobener Gebühren auf der Grundlage einer eindeutigen ID einer im Kraftfahrzeug festgelegten On-Board-Einheit (1). Die mit einer internetfähigen Interfaceeinrichtung (2) gekoppelte On-Board-Einheit (1) ist mit Sende- und Empfangsmitteln für die drahtlose Kommunikation mit den Kontrolleinrichtungen (4, 5) der Parkanlage ausgestattet. Bei der Einfahrt in die und der Ausfahrt aus der Parkanlage erfolgt zwischen der On-Board-Einheit (1) und den Kontrolleinrichtungen (4, 5) ein drahtloser Datenaustausch, in dessen Rahmen die ID der On-Board-Einheit (1) an die Kontrolleinrichtungen (4, 5) übertragen wird. Ferner werden durch die Interfaceeinrichtung (2) in Zuordnung zu dieser ID an das Frontend (7) des ePark-Anbieters zumindest Angaben zur Identifikation der Parkanlage und zu Parkgebühren oder zur Parkdauer über das Internet gesendet, die zuvor von Backendeinrichtungen (8) der Parkanlage über die Kontrolleinrichtungen (4, 5) und die Interfaceeinrichtung(2) an die On-Board-Einheit (1) übertragen wurden.

## Beschreibung

Die Erfindung betrifft eine Lösung zur internetbasierten Bezahlung von Parkgebühren. Sie bezieht sich insbesondere auf ein Verfahren, welches eine flexible, einfache und komfortable Abwicklung des Bezahlvorgangs beim Parken in abgeschlossen Parkanlagen, wie in Parkhäusern, Tiefgaragen oder auf Großparkplätzen, also jenseits der Parkmöglichkeiten im Straßenbereich, ermöglicht. Darüber hinaus ist Gegenstand der Erfindung ein zur Durchführung des Verfahrens geeignetes System.

Nach dem Stand der Technik gestaltet sich die Abwicklung eines Parkvorgangs in einem Parkhaus, in einer öffentlichen Tiefgarage oder auf einem abgeschlossenen Großparkplatz (im Weiteren werden die drei vorgenannten Möglichkeiten des Parkens als Parkanlage bezeichnet) im Allgemeinen wie folgt. Der Fahrer eines zum Parken abzustellenden Fahrzeugs muss in einer Zufahrt zu der Parkanlage vor einer Schranke halten, das Seitenfenster herunterlassen und einen Bedienknopf eines Automaten betätigen. Der Automat gibt daraufhin für den Fahrer eine Magnetstreifenkarte, einen Parkchip oder ein ähnliches Ticket oder Token aus. Mit der Entnahme des vorgenannten Tickets beziehungsweise Tokens durch den Fahrer öffnet sich die Schranke und gibt die Einfahrt zur Parkanlage frei. Um die Parkanlage später mit dem Fahrzeug wieder verlassen zu können, muss der Fahrer zunächst durch Einschieben des bei der Einfahrt gelösten Tickets in einen Kassenautomaten und anschließenden Geldeinwurf (oder gegebenenfalls durch Verwendung einer Geldkarte) die für die Nutzung der Parkanlage fällig gewordene Parkgebühr entrichten. Er erhält dann das Ticket, auf dem oder für das in entsprechenden Backendeinrichtungen der Parkanlage die erfolgte Bezahlung durch den Kassenautomaten vermerkt wurde, wieder zurück. Zum Herausfahren aus der Parkanlage fährt der Fahrer dann mit dem Fahrzeug an eine in einer Ausfahrt der Parkanlage angeordnete Schranke heran. Hier muss er wiederum die Seitenscheibe des Fahrzeugs herunterlassen und das Ticket, auf dem oder für das zuvor der Bezahlvorgang vermerkt worden war, in einen im Schrankenbereich befindlichen Automaten einführen. Hierauf öffnet sich die Schranke, womit die Ausfahrt für das Fahrzeug freigegeben wird.

Der zuvor beschriebene Ablauf ist für den Fahrer eines Fahrzeugs in vielerlei Hinsicht umständlich und mit einem gewissen Aufwand verbunden. Ein besonderes Problem stellt dabei häufig die Bedienung der Automaten im Schrankenbereich der Zufahrt der Parkanlage sowie bei der Ausfahrt dar. Dabei ist vielfach zu beobachten, dass die Autofahrer Schwierigkeiten haben, Bedienelemente der vorgenannten Automaten durch das geöffnete Seitenfenster hindurch zu erreichen. Daher und um zu vermeiden, dass das Ticket oder Token bei der Ausgabe durch den Automaten in der Einfahrt oder beim Versuch des Einführens in den Automaten herunterfällt, versuchen die Autofahrer im Allgemeinen möglichst nahe an die besagten Automaten heranzufahren. Dies birgt jedoch wiederum die Gefahr, dass Fahrzeuge an die Automaten anstoßen und es zu einer Beschädigung des jeweiligen Fahrzeugs und/oder des Automaten kommt.

Es sind bereits unterschiedliche Lösungen bekannt geworden, durch welche sich Teilaspekte des gesamten, die Zufahrt- und Ausfahrtkontrolle sowie die Bezahlung der Parkgebühren umfassenden Parkvorgangs für den Nutzer vereinfachen. Bezüglich der Bezahlung der Parkgebühren ist beispielsweise der Einsatz von Geldkartenlesern bekannt geworden, durch welche der Umgang mit Bargeld und Parktickets entfällt. Der Benutzer eines Parkhauses kann hierdurch dieses wieder verlassen, ohne sich zuvor an einen Kassenautomaten begeben zu müssen. Jedoch bleibt auch bei dieser Lösung der Nachteil bestehen, dass die Autofahrer bei der Ein- und Ausfahrt an einen Automaten heranfahren müssen, welcher in einem Schrankenbereich angeordnet ist und dem Auslesen von auf einer Geldkarte befindlichen Informationen dient. Gegebenenfalls kann sich dabei die Verweildauer im Schrankenbereich gegenüber den herkömmlichen Systemen durch den Lese- und Abrechnungsvorgang in nachteiliger Weise auch noch etwas verlängern. Zudem ist die Entrichtung der Parkgebühren auf eine einzelne Zahlungsart, nämlich entweder Abbuchung von einer Guthabenkarte oder Online-Abbuchung bei Verwendung einer EC- oder Kreditkarte, beschränkt. Auch eine individuelle Preisgestaltung, bei welcher zum Beispiel Großkundenrabatte eingeräumt werden können, ist hierbei im Grunde nicht möglich.

Andere inzwischen bekannt gewordene Systeme verwenden für die Zugangskontrolle Transponderkarten oder Magnetschlüssel. Die vorgenannten Medien dienen hierbei allerdings nur der Zugangskontrolle und eine Gebührenerfassung und Gebührenabrechnung ist damit in der Regel nicht möglich. Der Vorteil für den Nutzer ist, dass er bei dieser Nutzung die Schrankenanlage im Ein- und Ausfahrtbereich funkgestützt aus dem Fahrzeug heraus bedienen kann.

US 2003/0050793 A1 beschrieben. Demgemäß wird vor dem Passieren einer Schrankeneinrichtung im Zufahrtsbereich eine in dem zu parkenden Fahrzeug mitgeführte Kontrolleinrichtung aktiviert und in Einrichtungen der Parkanlage die Einfahrtzeit in Zuordnung zu einer ID der Kontrolleinrichtung gespeichert. Zur Ausfahrt aus der Parkanlage werden an einer weiteren im Ausfahrtbereich angeordneten Schrankeneinrichtung die Kontrolleinrichtung erneut aktiviert und von dieser die Parkdauer und die Parkgebühr errechnet. Nach der aufgrund einer manuellen Bedienhandlung des Nutzers an der Kontrolleinrichtung oder durch die Kontrolleinrichtung automatisch veranlassten Entrichtung der errechneten Parkgebühr wird die Ausfahrt freigegeben. Die Entrichtung der Parkgebühr ist dabei an die Verwendung einer mit der Kontrolleinrichtung benutzten, zuvor nach dem Prepaid-Prinzip aufgeladenen virtuellen Geldbörse und damit an eine festgelegte Zahlungsart gebunden, wobei die jeweils entrichtete Parkgebühr von dem in einem Speicher der Kontrolleinrichtung verwalteten jeweiligen Guthaben der virtuellen Geldbörse abgezogen wird.

Unter www.mobil-parken.de ist ein Verfahren bekannt geworden, bei dem Parktickets per SMS gelöst und bezahlt werden können. Die Lösung bezieht sich aber auf Parkvorgänge an öffentlichen Straßen und Plätzen, bei denen eine Zu- und Ausfahrtkontrolle nicht erfolgt. Die Abrechnung erfolgt über den Anbieter des Verfahrens als den Zahlungsdienstleister oder über die Mobilfunkrechnung. Aus sicherheitstechnischen Gründen sind hierbei die Zahlungsverfahren üblicherweise eingeschränkt. Im Rahmen der Nutzung dieser Lösung sind bei jedem Parkvorgang eine den Abstellort des Fahrzeugs bezeichnende Parkzonennummer, das Kfz-Kennzeichen und die wahrscheinliche Parkdauer in ein Mobilfunkgerät einzugeben. Zur Übermittlung dieser Angaben an den Betreiber beziehungsweise dessen Zahlungsdienstleister fallen zusätzliche SMS-Kosten an.

Aufgabe der Erfindung ist es, eine alternative Lösung anzugeben, welche insbesondere eine im Hinblick auf die verwendbaren Zahlungsarten und Zahlungsmittel vereinfachte und flexiblere Bezahlung von beim Parken in einer abgeschlossenen, das heißt mit Kontrolleinrichtungen für die Zufahrt und die Ausfahrt ausgestatten Parkanlage entstehenden Parkgebühren ermöglicht. Zugleich soll sich der gesamte Park- und Bezahlvorgang einfach und komfortabel für die Nutzer gestalten. Hierzu sind ein entsprechendes Verfahren und ein zur Durchführung dieses Verfahrens geeignetes System anzugeben.

Die Aufgabe wird durch ein Verfahren mit den Merkmalen des Patentanspruchs 1 gelöst. Ein die Aufgabe lösendes, zur Durchführung des Verfahrens geeignetes System ist durch den ersten Sachanspruch charakterisiert. Vorteilhafte Aus- beziehungsweise Weiterbildungen der Erfindung sind durch die jeweiligen Unteransprüche gegeben.

Bei dem zur Lösung der Aufgabe vorgeschlagenen Verfahren handelt es sich um ein Verfahren zur Bezahlung von Parkgebühren durch Abwicklung eines die Bezahlung dafür erhobener Gebühren einschließenden Parkvorgangs in einer mit Kontrolleinrichtungen für die Ausfahrt und die Zufahrt und mit elektronischen Backendeinrichtungen ausgestatteten Parkanlage. Im Hinblick darauf, dass in geeigneter Weise insbesondere die jeweilige Parkdauer und andere, an die jeweils genutzte Parkanlage gebundene Daten für die Erhebung der Parkgebühren zu berücksichtigen sind, bezieht sich das in den Patenansprüchen definierte Verfahren auf die Abwicklung eines jeweiligen Parkvorgangs insgesamt, wobei aber die spezielle, im nachfolgenden näher beschriebene Abwicklung des darin eingeschlossen internetbasierten Bezahlvorgangs den eigentlichen Kern des Verfahrens bildet.

Voraussetzung für die Nutzung des Verfahrens ist es, dass sich ein jeweiliger Nutzer bei einem das Verfahren als Dienst anbietenden Parkdienstanbieter registriert beziehungsweise anmeldet. Der betreffende Nutzer, also im Allgemeinen der Führer eines Kraftfahrzeugs, richtet mit seiner Anmeldung bei dem Parkdienstanbieter einen Account ein beziehungsweise erwirbt bei diesem eine Art Mitgliedschaft. Selbstverständlich muss die betreffende, diesen Account beziehungsweise die Mitgliedschaft erwerbende Person im Zusammenhang mit einem jeweiligen Parkvorgang nicht in jedem Falle selbst der Führer eines in eine für die Durchführung des Verfahrens eingerichteten Parkanlage einzustellenden Fahrzeugs sein. Genauso gut kann er seine Mitgliedschaft im Einzelfalle auch als Mitfahrer beziehungsweise Insasse eines zur Nutzung des Verfahrens eingerichteten Kraftfahrzeugs einsetzen. Vereinfachend soll nachfolgend jeweils von dem Nutzer beziehungsweise Führer eines Kraftfahrzeugs gesprochen werden, wobei dies die Möglichkeit, dass der Nutzer nur Mitfahrer in dem betreffenden Fahrzeug ist, stets mit einschließt.

Im Hinblick auf den elektronischen Charakter der Lösung soll im Kontext der Darstellung der Erfindung auch von einem ePark-Verfahren beziehungsweise einem ePark-System gesprochen werden. Insoweit wird für den in der Beschreibung und in den Patentansprüchen gebrauchten Begriff "Parkdienstleister" synonym im Weiteren auch der Begriff "ePark-Anbieter" gebraucht werden. Was die Parkanlage anbelangt, so handelt es sich bei dieser um eine Anlage zum Einstellen von Kraftfahrzeugen, welche, wie schon angegeben, mit Kontrolleinrichtungen für die Zufahrt und für die Ausfahrt ausgestattet ist und Off-Street-Parkplätze, also Parkplätze im nicht öffentlichen Verkehrsraum, bereitstellt. Typisch hierfür sind Parkhäuser, Tiefgaragen oder abgeschlossene Großparkplätze, welche im Allgemeinen privatwirtschaftlich betrieben werden.

Gemäß dem vorgeschlagenen Verfahren erfolgen die Zu- und Ausfahrtkontrolle sowie die Bezahlung durch den Betreiber einer jeweiligen Parkanlage für das Einstellen eines Kraftfahrzeugs erhobener Gebühren auf der Grundlage einer eindeutigen ID einer in die Fahrzeugelektronik integrierten oder in dem Kraftfahrzeug festgelegten On-Board-Einheit. Die entsprechende On-Board-Einheit ist dabei mit Sende- und Empfangsmitteln für die drahtlose Kommunikation, vorzugsweise auf Funkbasis, ausgestattet. Bei dem zuvor angesprochenen Betreiber der Parkanlage, durch welchen für das Einstellen der Kraftfahrzeuge entsprechende Gebühren erhoben werden, kann es sich, muss es sich aber nicht zwingend, um den Parkdienstanbieter beziehungsweise den ePark-Anbieter handeln. Sofern eine Trennung zwischen dem Betreiber der Parkanlage und dem ePark-Anbieter gegeben ist, stellt demnach der ePark-Anbieter dem Betreiber der Parkanlage seine Infrastruktur zur Veranlassung der Bezahlung von Parkvorgängen zur Verfügung. Der ePark-Anbieter wird dabei auf der Grundlage einer Geschäftsbeziehung mit dem Betreiber der Parkanlage in festgelegter Weise an den eingenommenen Parkgebühren partizipieren. Hierbei handelt es sich jedoch um eine Frage, welche im Rahmen eines entsprechenden Geschäftsmodells zu regeln ist und somit eine rein organisatorische Frage darstellt, die hier nicht Gegenstand weiterer Ausführungen sein soll.

Die On-Board-Einheit ist, wie bereits ausgeführt, in die Fahrzeugelektronik integriert oder in einem jeweiligen Fahrzeug festgelegt, also in geeigneter Weise an dieses gebunden. Im erstgenannten Falle bezieht sich dies beispielsweise auf die unmittelbare Einbeziehung dieser On-Board-Einheit in die Elektronik moderner, mit einem CAN-Bus ausgestatteter Kraftfahrzeuge. Was die Festlegung einer entsprechenden On-Board-Einheit in einem Kraftfahrzeug betrifft, so wird diesbezüglich von einer mit den On-Board-Einheiten bekannter Maut-Systeme vergleichbaren Lösung ausgegangen, bei welcher die On-Board-Einheit ähnlich einem Autoradio oder einem Einbaunavigationsgerät, beispielsweise im Wege der Nachrüstung, in das Kraftfahrzeug eingebaut oder über dafür vorgesehene Schnittstellen mit dem Fahrzeug verbunden wird.

Im Hinblick auf die dieser On-Board-Einheit eindeutig zugeordnete ID (es handelt sich um ein manipulationssicher an die betreffende Einheit gebundenes Identifikationskennzeichen, welches vorzugsweise weltweit nur einmal vergeben wird) ist das Verfahren wie folgt charakterisiert. Die ID der On-Board-Einheit wird durch eine mit dieser gekoppelte, ebenfalls Sende- und Empfangsmittel für die drahtlose Kommunikation, vorzugsweise auf Funkbasis aufweisende sowie internetfähige Interfaceeinrichtung über das Internet an ein Frontend des ePark-Anbieters übertragen. Zu der Frage der Kopplung der vorgenannten Interfaceeinrichtung an die On-Board-Einheit sollen im Zusammenhang mit der Darstellung des zur Durchführung des Verfahrens ausgebildeten Systems noch nähere Erläuterungen gegeben werden. Bei der Einfahrt in die und bei der Ausfahrt aus der Parkanlage erfolgt zwischen der On-Board-Einheit und den eingangs angesprochenen Kontrolleinrichtungen der Parkanlage ein drahtloser Datenaustausch, in dessen Rahmen die ID der On-Board-Einheit an die Kontrolleinrichtungen übertragen wird. Ferner werden in Zuordnung zu der ID durch die mit der On-Board-Einheit gekoppelte Interfaceeinrichtung über das Internet an das Frontend des ePark-Anbieters zumindest Angaben zur Identifikation der Parkanlage und zu Parkgebühren oder zur Parkdauer übertragen. Dabei werden diese vorgenannten Angaben zu dem Parkvorgang von Backendeinrichtungen der Parkanlage zur Verfügung gestellt und bei dem Datenaustausch mit den Kontrolleinrichtungen von diesen über die On-Board-Einheit an die Interfaceeinrichtung übermittelt. Ein diesbezüglicher Ablauf wird nachfolgend ebenfalls noch im Detail dargestellt werden.

Auf der Grundlage der in Zuordnung zu der jeweiligen ID einer On-Board-Einheit an das Frontend des ePark-Anbieters übertragenen Angaben wird durch die mit dem Frontend verknüpften elektronischen Einrichtungen des ePark-Anbieters in Interaktion mit Einrichtungen eines Zahlungsdienstleisters die Begleichung für das Parken zu zahlender Beträge veranlasst. Bei dem Zahlungsdienstleister handelt es sich ebenfalls um eine geschäftliche Kategorie, so dass Ausführungen dazu im Zusammenhang mit der weiteren Erläuterung der Erfindung gewissermaßen nur am Rande gemacht werden sollen. An dieser Stelle sei lediglich angemerkt, dass es sich bei diesem Zahlungsdienstleister beispielsweise um einen Clearing-Partner eines das Verfahren verwendenden Nutzers beziehungsweise eines Kraftfahrzeugführers, also beispielsweise um dessen Bank, handeln kann. Denkbar ist es aber auch, dass der eigentliche Geldverkehr zur Abwicklung des Bezahlvorgangs unter Einbeziehung eines Zahlungsdienstleisters beziehungsweise eines Payment-Anbieters (Payment-Service-Provider = PSP) erfolgt, welcher als zwischengeschalteter Dienstleister fungiert. Im letztgenannten Falle- und auch dies ist letztlich wiederum nur eine organisatorische Frage - kann gegebenenfalls der Zahlungsdienstleister gleichzeitig auch als ePark-Anbieter auftreten.

In jedem Falle ist durch die Bezahlung der Parkgebühren über das Internet und die Einrichtungen des Parkdienstanbieters (des ePark-Anbieters), welcher seinerseits den eigentlichen Geldverkehr mit dem durch den Nutzer bei der Einrichtung des Accounts und/oder die einer späteren Anpassung der Accountdaten selbst hinterlegten Clearingpartner oder sonstigen Zahlungsdienstleister abrechnet, für den Nutzer ein sehr hohes Maß an Flexibilität bezüglich der Bezahlungsmöglichkeiten gegeben. Er muss sich dabei nicht um gegebenenfalls unterschiedliche Zahlungsmodalitäten verschiedener Betreiber von einzelnen Parkanlagen kümmern, da sein Vertragspartner der ePark-Anbieter ist, der wiederum durch die Berücksichtigung verschiedener durch einen Nutzer genutzter, mit dem ePark-Anbieter im Rahmen des Verfahrens in geschäftlicher Beziehung stehender Parkanlagen auf einfache Weise Rabattangebote und spezielle Kundenangebote realisieren kann. Unter Nutzung der erfindungsgemäßen Lösung können dabei als ePark-Anbieter beispielsweise auftreten:
- Betreiber von Mobilfunknetzen. Das Angebot richtet sich dann überwiegend an Privatkunden. Die Anmeldung erfolgt als Zubuch-Merkmal zu einem Mobilfunk-Tarif oder über einen Einzelvertrag. Für die Teilnahme wird überwiegend das private Mobilfunkgerät beziehungsweise Smartphone verwendet.
- Firmen mit größerer Fahrzeugflotte und/oder mit einem verzweigtem Außendienst. Betreiber eines entsprechenden Portals (zum Beispiel als Teil der Firmen-Homepage), das heißt des genannten Frontends sind dabei Unternehmen, die die Abrechnung von Parkgebühren für ihre Mitarbeiter vereinfachen möchten. Die Erstattung der Parkgebühren kann zeitlich, räumlich oder mengenmäßig eingeschränkt werden. Die On-Board-Einheit oder die On-Board-Einheit und die Interfaceeinrichtung können dabei zum Beispiel in Fahrzeuge einer Firmenwagenflotte integriert sein oder, entsprechend einer modularen Lösung bezüglich der Ausbildung der On-Board-Einheit und der Interfaceeinrichtung in privat genutzten Dienstwagen zum Einsatz kommen.
- Fahrzeughersteller die den Service als besonderes Ausstattungsmerkmal ihrer Modelle anbieten möchten. Eine Reihe von Fahrzeugherstellern stattet heute schon viele Fahrzeugmodelle mit internetfähigen Multi-Media-Geräten aus. In Kombination mit einer daran gekoppelten On-Board-Einheit wird dabei die Palette der Fahrer-Assistenz-Systeme erweitert. Die Abrechnung der Parkgebühr kann über die Hausbank der Fahrzeughersteller angeboten werden. Den Betrieb der ePark-Plattform mit dem Frontend übernimmt ein externer als Parkdienstanbieter auftretender Dienstleister.
- Car-Sharing Unternehmen oder Autovermieter. Die Attraktivität von Car-Sharing Unternehmen wird gesteigert, wenn das Abstellen der Fahrzeuge in zentralen Lagen durch den Einsatz des erfindungsgemäß vorgeschlagenen Verfahrens vereinfacht wird. Für Autovermieter kann das Verfahren ein zusätzliches Service-Angebot darstellen. Alle fahrzeugseitig dafür vorzusehenden Komponenten, also die On-Board-Einheit und die Interfaceeinrichtung, sind hierbei fest in die Fahrzeuge integriert. Die für den Dienst notwendigen Leistungen werden durch Dritte (IT-Unternehmen, Netzbetreiber usw.) erbracht.
- öPNV-Unternehmen, Messe-Gesellschaften, Hallen-Betreiber, Flughäfen und dergleichen. Zur Erweiterung des Mobilitätsangebots und als Anreiz zum Umstieg auf den öffentlichen Nahverkehr (Mobil-Card) können Nahverkehrsgesellschaften die Abrechnung von Parkgebühren (zum Beispiel von Park and Ride - Plätzen) gemäß dem vorgeschlagenen Verfahren an ihre Verbund-Angebote koppeln. In Verbindung mit Eintrittskarten, Flug- und Bahn-Tickets wird die Abrechnung von Parkgebühren erheblich vereinfacht. Die Nutzung des Systems erfolgt überwiegend auf Basis einer bezüglich der Ausbildung der On-Board-Einheit und der Interfaceeinrichtung, modularen Variante des Systems, wobei es sich bei diesen Komponenten um kundeneigene Komponenten (zum Beispiel Smartphone des Nutzers) oder um vom Anbieter bereitgestellte Komponenten handelt (zum Beispiel Miete/Überlassung der On-Board-Einheit Download der erforderlichen Programmanwendung, das heißt der Parkanwendung beim Anbieter).

Bestandteil des die Aufgabe lösenden und zur Durchführung des Verfahrens ausgebildeten Systems zur Abwicklung eines die Bezahlung dafür erhobener Gebühren einschließenden Parkvorgangs in einer eine Zufahrt- und Ausfahrtkontrolle aufweisenden Parkanlage sind zunächst entsprechende, in der Parkanlage angeordnete Kontrolleinrichtungen, welche mit Sende- und Empfangsmitteln für die drahtlose Kommunikation, vorzugsweise mit Funksende- und Empfangsmitteln ausgestattet sind. Ferner umfasst das System zu seiner Nutzung eingerichtete Kraftfahrzeuge, nämlich Kraftfahrzeuge mit einer in die Fahrzeugelektronik integrierten oder in dem Kraftfahrzeug festgelegten, mit entsprechenden Sende-und Empfangsmitteln ausgestatteten sowie eine eindeutige ID aufweisenden On-Board-Einheit. Zu dem System gehört außerdem eine mit der On-Board-Einheit eines jeweiligen Kraftfahrzeugs gekoppelte, ebenfalls Sende- und Empfangsmittel für die drahtlose Kommunikation sowie eine Verarbeitungseinheit aufweisende, internetfähige Interfaceeinrichtung. Ein weiterer wichtiger Bestandteil des Systems ist eine in der Verarbeitungseinheit der vorgenannten Interfaceeinrichtung ablaufende Software, also eine entsprechende Programmanwendung beziehungsweise Parkanwendung. Letztere ist, wie heute bei modernen, insbesondere mobilen Endgeräten üblich, vorzugsweise als eine Minianwendung in Art einer App ausgeführt und soll in Anlehnung an die zum Verfahren verwendeten Begriffe im Weiteren auch als eP-App (App beziehungsweise Applikation für eParken, das heißt elektronisches Parken) bezeichnet werden. Schließlich gehören zu dem erfindungsgemäßen System noch elektronische Einrichtungen des ePark-Anbieters mit insbesondere einem Frontend für eine über das Internet abgewickelte Kommunikation mit Interfaceeinrichtungen für die Nutzung des Systems eingerichteter Kraftfahrzeuge und mit einer Datenbank zur Verwaltung von Kundendaten sowie zur Speicherung von Datensätzen zu Parkvorgängen in Zuordnung zur ID der On-Board-Einheit eines jeweiligen Kraftfahrzeugs.

Vorstehend wurde wiederholt davon gesprochen, dass die mit ihrer Verarbeitungseinheit die eP-App ausführende Interfaceeinrichtung mit der On-Board-Einheit eines für die Nutzung des Verfahrens eingerichteten Kraftfahrzeugs gekoppelt ist. Die entsprechende Kopplung besteht dabei zumindest auf der Softwareebene bei der Nutzung des Verfahrens. Darüber hinaus kann aber in Abhängigkeit von der konkreten Ausbildungsform des erfindungsgemäßen Systems auch insoweit eine physische Kopplung bestehen, dass beide Einheiten, also die On-Board-Einheit und die Interfaceeinrichtung, integraler Bestandteil einer gemeinsamen, in dem Kraftfahrzeug verbauten Einrichtung sind.

Insoweit sind gemäß der Erfindung bezüglich des erfindungsgemäßen Systems zwei grundsätzliche Ausbildungsformen vorgesehen. Eine erste Ausbildungsform betrifft dabei eine bezüglich der On-Board-Einheit und der Interfaceeinrichtung integrative Variante. Bei dieser Variante sind, wie schon angesprochen, die On-Board-Einheit und die Interfaceeinrichtung als eine integrale Einheit im Kraftfahrzeug verbaut, welche auch die Verarbeitungseinheit und die bei der Durchführung des Verfahrens auf ihr ablaufende, die On-Board-Einheit sowie die Interfaceeinrichtung auf der Softwareebene miteinander koppelnde eP-App umfasst. Die Interfaceeinrichtung kann hierbei beispielsweise als Schnittstelle zu einem Infotainment-System oder als eine Multimediaschnittstelle (MMI = Multimedia-Interface) zu Bedienung im Fahrzeug angeordneter Systeme und Geräte, einschließlich der On-Board-Einheit und der zur Durchführung des Verfahrens erforderlichen Programmanwendung, also der Parkanwendung, realisiert sein.

Die zweite Variante betrifft eine modulare Ausbildungsform. Hierbei ist die On-Board-Einheit als ein Kleingerät, vergleichbar der schon erwähnten On-Board-Einheit für die Mauterhebung, in einem zur Nutzung des erfindungsgemäßen Verfahrens eingerichteten Kraftfahrzeug festgelegt. Als Interfaceeinrichtung fungiert bei dieser Variante ein mobiles Endgerät des Nutzers, auf welchem die eP-App lauffähig ist. Insoweit handelt es sich bei dem vorgenannten mobilen Endgerät vorzugsweise um ein Smartphone oder um einen über einen Zugang zum Internet, das heißt über eine Mobilfunkeinheit verfügenden Tablet-PC. Die Kopplung von On-Board-Einheit und Interfaceeinrichtung ist dabei ausschließlich auf der Softwareebene durch eP-App und über die zwischen ihnen erfolgende drahtlose Kommunikation gegeben.

Wie eingangs angegeben, muss sich ein Nutzer des Verfahrens und des Systems beziehungsweise der Führer eines dazu eingerichteten Kraftfahrzeugs einmalig bei dem ePark-Anbieter anmelden. Hierbei werden persönliche Daten für den Nutzer, aber insbesondere auch die von diesem bevorzugten beziehungsweise für ihn im Rahmen des Verfahrens erlaubten Bezahlverfahren und die diese ermöglichenden Zahlungsdienstleister beziehungsweise Clearingpartner erfasst und in einer Datenbank der elektronischen Einrichtungen des Parkdienstleisters abgelegt. Selbstverständlich können diese Angaben durch den Nutzer später geändert werden, wobei sich der Nutzer zur Vornahme entsprechender Änderungen bei den Einrichtungen des ePark-Anbieters vorzugsweise jeweils authentifizieren muss.

Beim Antritt einer Fahrt mit dem zur Nutzung des Verfahrens ausgestatteten Kraftfahrzeug oder während der Fahrt wird die On-Board-Einheit in Betrieb genommen und die zwischen ihr und der Interfaceeinrichtung auf der Softwareebene erforderliche Kopplung hergestellt. Diese Kopplung erfolgt durch den Start der eP-App der Interfaceeinrichtung, wobei mit dem Start der eP-App eine Parksession eröffnet wird. Die Bindung der eP-App an die mit der eindeutigen ID versehene On-Board-Einheit beziehungsweise die über die eP-App erfolgende Kopplung zwischen der On-Board-Einheit und der Interfaceeinrichtung kommt insbesondere im Hinblick auf die angesprochene modulare Variante des Systems einer Personalisierung der On-Board-Einheit gleich, da sich der Nutzer hierbei gegenüber der Interfaceeinrichtung zum Start der eP-App identifiziert. Im Falle der modularen Ausbildung kann dabei die Kommunikation zwischen der On-Board-Einheit und der Interfaceeinrichtung über WLAN oder Bluetooth vorzugsweise im Wege der Remote-Nutzung des SIM-Access-Profile-Datenübertragungsprotokolls (SAP) erfolgen.

Unmittelbar an die Kopplung zwischen der On-Board-Einheit und der Interfaceeinrichtung schließt sich eine Login-Prozedur an, in deren Rahmen sich der Nutzer beziehungsweise der Fahrzeugführer mittels der zur Identifizierung gegenüber der Interfaceeinrichtung beziehungsweise der eP-App eingegebenen Daten bei den Einrichtungen des ePark-Anbieters, nämlich bei dessen Frontend für die Nutzung des erfindungsgemäßen Verfahrens autorisiert. Sofern dieses Login erfolgreich ist, ist dem Nutzer beziehungsweise Fahrzeugführer im Rahmen der gestarteten Parksession zumindest grundsätzlich eine Verwendung des erfindungsgemäßen Verfahrens in dafür eingerichteten Parkanlagen möglich. In der Datenbank der Einrichtungen des ePark-Anbieters wird ein aktueller Datensatz angelegt, in welchem den bereits in der Datenbank verfügbaren Kundendaten die im Anschluss an den erfolgreichen Login-Vorgang durch die Interfaceeinrichtung übermittelte ID der mit dieser Interfaceeinrichtung gekoppelten On-Board-Einheit hinzugefügt wird.

Sollte eine Kopplung zwischen der On-Board-Einheit und der Interfaceeinrichtung nicht zustande kommen, so scheitert der Login am Frontend. In diesem Falle oder im Falle eines aus anderen Gründen scheiternden Logins wird dies dem Nutzer dadurch signalisiert, dass eine entsprechende Nachricht an die eP-App übermittelt und an einem Display der Interfaceeinrichtung, also beispielsweise des die eP-App ausführenden Smartphones, ausgegeben wird. Das hier beschriebene Verfahren zur Abwicklung des Parkvorgangs mit der dabei vorgesehenen automatisierten und internetbasierten elektronischen Abwicklung des Bezahlvorgangs kann dann durch den Fahrzeugführer nicht genutzt werden. Die mit der Inbetriebnahme der On-Board-Einheit gestartete Parksession wird beendet.

Ist hingegen der Login-Vorgang erfolgreich, so wird die On-Board-Einheit, deren ID zuvor an das Frontend des ePark-Anbieters übermittelt wurde, zur unmittelbaren Nutzung des erfindungsgemäßen Verfahrens aktiviert. Hierdurch sind dem Fahrzeugführer die Nutzung des Verfahrens und die dazu erforderliche Kommunikation zwischen der On-Board-Einheit und den Kontrolleinrichtungen einer Parkanlage ermöglicht. Der mit dem Start der Parksession angelegte Datensatz bleibt in der Datenbank der Einrichtungen des ePark-Anbieters persistent bestehen bis die Parksession vollständig beendet wird, ohne dass dabei ein zu dem Datensatz gehörendes Kennzeichen beziehungsweise Merkmal "ist geparkt" gesetzt ist. Eine Beendigung der Parksession erfolgt außerdem automatisch, wenn die Verbindung zwischen der eP-App und der On-Board-Einheit und somit die Kopplung zwischen der On-Board-Einheit und der Interfaceeinrichtung dauerhaft unterbrochen ist, weil entweder der Fahrer die Session manuell beendet oder sich die Interfaceeinrichtung in Form eines Smartphones bei nicht gesetztem Merkmal "ist geparkt" außerhalb der Empfangsreichweite der On-Board-Einheit befindet.

Bei gestarteter Parksession und aktivierter On-Board-Einheit gestaltet sich der eigentliche Parkvorgang, also das Einstellen eines Kraftfahrzeugs in eine zur Durchführung des Verfahrens eingerichtete Parkanlage, gemäß einem möglichen Ablauf bei der Anfahrt auf die betreffende Parkanlage wie folgt. Sobald sich das Kraftfahrzeug auf der Zufahrt zur Parkanlage im Empfangsbereich der Sende- und Empfangsmittel der Kontrolleinrichtung für die Zufahrt befindet, wird die ID der im Fahrzeug befindlichen On-Board-Einheit durch deren Sende- und Empfangsmittel an die Kontrolleinrichtung, bei der es sich vorzugsweise um eine Schranken-Anlage handelt, übertragen. Die Kontrolleinrichtung überträgt diese ID an elektronische Einrichtungen der Parkanlage, bei denen es sich um Backendeinrichtungen handelt. Die Verbindung zwischen diesen Backendeinrichtungen und der Kontrolleinrichtung, also vorzugsweise der Schranken-Anlage, kann als Kabelverbindung realisiert oder auch drahtlos, dann vorzugsweise funkgestützt, ausgebildet sein.

Als Antwort auf die Aussendung ihrer ID erhält die On-Board-Einheit des Kraftfahrzeugs über die Kontrolleinrichtung für die Zufahrt einen durch die Backendeinrichtungen der Parkanlage generierten Einfahrt-Zeitstempel. Ferner wird eine eindeutige, die Parkeinrichtung identifizierende Kennung an die On-Board-Einheit übermittelt. Der Einfahrt-Zeitstempel und die Kennung der Parkanlage werden durch die eP-App aufgrund der zwischen der On-Board-Einheit und der Interfaceeinrichtung bestehenden Kopplung durch die Interfaceeinrichtung über das Internet an das Frontend des ePark-Anbieters weitergeleitet. Durch die Einrichtungen des ePark-Anbieters wird anhand der Kennung der Parkanlage überprüft, ob der Fahrzeugführer bei der von ihm angefahrenen Parkanlage das ePark-Verfahren nutzen darf. Die dabei zwischen dem Fahrzeugführer und der ePark-Anlage beziehungsweise deren Kennung herzustellende logische Verbindung ist über die ID der On-Board-Einheit des Kraftfahrzeugs aufgrund der beim Fahrtantritt oder auf der Fahrt zu der Parkanlage durch die im Zuge der Personalisierung erfolgte Verbindung der eP-App und der damit verbundenen Kopplung zwischen der Interfaceeinrichtung und der On-Board-Einheit gegeben.

Die Prüfung, ob der Fahrzeugführer für den Parkvorgang in der von ihm angefahrenen Parkanlage das erfindungsgemäße ePark-Verfahren nutzen darf, kann zum Beispiel zu einem negativen Ergebnis führen, wenn die Nutzung genau dieser Parkanlage durch den betreffenden Kunden beziehungsweise Fahrzeugführer eventuell aufgrund vertraglicher Regelungen von der Verwendung des ePark-Verfahrens ausgenommen ist, wenn dem Fahrzeugführer die Nutzung nur innerhalb eines Zeitfensters erlaubt ist, in welches der Prüfungszeitpunkt nicht fällt, wenn die betreffende Parkanlage nur bestimmte Bezahlverfahren zulässt, welche für diesen Kunden beziehungsweise Fahrzeugführer bei der Anmeldung beim Parkanbieter nicht vermerkt wurden, oder wenn die Prüfung ergibt, dass die Nutzung auf der Grundlage eines Guthabenkontingents erfolgt, welches augenblicklich erschöpft ist.

Im Falle dessen, dass die Prüfung negativ verläuft, erhält der Fahrzeugführer von dem Frontend des Parkanbieters eine entsprechende Mitteilung, welche ihm das negative Ergebnis der Prüfung auf einem Display, in sonstiger optischer Weise oder auch akustisch an der Interfaceeinrichtung signalisiert. Für den Kunden wird dann durch die Kontrolleinrichtung für die Zufahrt ein Parkticket entsprechend der gängigen, nach dem Stand der Technik bekannten Verfahren ausgeworfen. Der gesamte Parkvorgang wird dann folglich in herkömmlicher Weise abgewickelt. Bei negativem Prüfungsergebnis wird zudem, initiiert durch das Frontend des Parkanbieters, über das Internet, die Interfaceeinrichtung und die mit dieser gekoppelte On-Board-Einheit sowie über die mit der On-Board-Einheit kommunizierende Kontrolleinrichtung für die Zufahrt ein Löschsignal an die Backendeinrichtungen der Parkanlage gesendet, so dass der dort initiierte Ablauf für einen Parkvorgang entsprechend dem erfindungsgemäßen Verfahren abgebrochen wird.

Ist hingegen die zur Berechtigung des Fahrzeugführers für die Nutzung des erfindungsgemäßen Verfahrens erfolgende Prüfung positiv, so wird der Fahrzeugführer über entsprechende Ausgabemittel (Display oder akustische Ausgabe) der Interfaceeinrichtung gefragt, ob er das, eine vereinfachte Bezahlung ermöglichende erfindungsgemäße Verfahren nutzen möchte. Lehnt er dies ab, schließen sich dieselben Abläufe wie im Falle eines negativen Ergebnisses der zuvor geschilderten Prüfung an. Stimmt er dem hingegen zu, so wird ihm durch die Kontrolleinrichtung, vorzugsweise durch Heben einer entsprechenden Schranke, die Zufahrt zur Parkanlage gewährt. Damit beginnt die der späteren, nach dem Verfahren erfolgenden Abrechnung zugrundezulegende Parkdauer zu laufen. Gleichzeitig werden die Einfahrtszeit, die erfolgte Einfahrtfreigabe, die Kennung der Parkanlage und die ID der On-Board-Einheit von der eP-App nochmals gegenüber dem Frontend des ePark-Anbieters bestätigt. Bei diesem erfolgt in dem aktuell zu dem Parkvorgang angelegten Datensatz der Eintrag eines Merkmals "ist geparkt". Der Fahrzeugführer kann nun sein Kraftfahrzeug in der Parkanlage abstellen und, sofern die On-Board-Einheit und die Interfaceeinrichtung entsprechend der modularen Variante ausgebildet sind, das die eP-App ausführende mobile Endgerät (zum Beispiel Smartphone), also die Interfaceeinrichtung mitnehmen, wobei die Parksession aufgrund des in der Datenbank bei dem Parkanbieter vermerkten Eintrags "ist geparkt" nicht beendet wird.

Die zwischen dem Fahrzeugführer als dem Kostenträger, der ID der On-Board-Einheit und der Kennung der Parkanlage hergestellte Kopplung beziehungsweise Beziehung verhindert, dass der Fahrzeugführer die Parkanlage ohne Bezahlvorgang verlässt. Auch sind dadurch Manipulationen derart ausgeschlossen, dass der Fahrzeugführer beispielsweise in einem zeitlich überlappenden Bereich sein als Interfaceeinrichtung fungierendes mobiles Endgerät an den Führer eines anderen Kraftfahrzeugs mit einer On-Board-Einheit übergibt.

Beim Verlassen der Parkanlage muss der Nutzer keinen Umweg machen, um die für die Nutzung der Parkanlage entstandenen Gebühren zu entrichten. Er kann sich vielmehr direkt zu seinem Kraftfahrzeug begeben und dieses in Richtung der Kontrolleinrichtung für die Ausfahrt bewegen. Sobald das Kraftfahrzeug, genauer gesagt dessen On-Board-Einheit, in die Sende- und Empfangsreichweite dieser Kontrolleinrichtung kommt, sendet die On-Board-Einheit ihre ID an die Kontrolleinrichtung aus. Diese wird wiederum an die Backendeinrichtungen der Parkanlage weitergeleitet. Hier werden mit Hilfe des Einfahrt-Zeitstempels die Parkdauer und das Brutto-Parkentgelt, also die zu entrichtenden Gebühren, ermittelt. Die vorgenannten Angaben werden von der On-Board-Einheit aufgrund der bestehenden Kopplung an die Interfaceeinrichtung weitergeleitet, welche sie ihrerseits, veranlasst durch die eP-App, an das Frontend des Parkanbieters überträgt. Durch die mit dem Frontend gekoppelten Einrichtungen des Parkanbieters wird schließlich durch direkte Abwicklung mit einem Clearing-Partner des Fahrzeugführers oder über Vermittlung eines Zahlungsdienstleisters beziehungsweise Payment-Service-Providers (PSP) die Gutschrift die Gebühren beim ePark-Anbieter, beispielsweise durch entsprechende Belastung eines im Rahmen der gewählten Bezahlverfahren durch den Fahrzeugführer beziehungsweise Nutzer angegebenen Kontos, veranlasst. Der ePark-Anbieter verrechnet dann seinerseits die Einnahmen entsprechend der getroffenen vertraglichen Vereinbarungen mit dem Betreiber der Parkanlage.

Ergänzend sei an dieser Stelle angemerkt, dass das Verfahren vorzugsweise so gestaltet ist, dass ein Nutzer die entstandenen Parkgebühren grundsätzlich notfalls auch durch eine Barzahlung begleichen kann. Wählt ein Nutzer beziehungsweise Fahrzeugführer diesen optional angebotenen Zahlungsweg, wird der sonst üblicherweise beim Anfahren der Kontrolleinrichtung für die Ausfahrt ablaufende automatisierte Bezahlvorgang mit einer entsprechenden Fehlermeldung abgebrochen und an das Frontend des ePark-Anbieters eine Nachricht übermittelt, wonach der Nutzer in bar bezahlt hat. In jedem Falle wird im Anschluss an die Bezahlung, unabhängig davon, ob diese automatisiert entsprechend dem Verfahren oder durch Barzahlung erfolgt, das Merkmal "ist geparkt" in dem im Rahmen der Parksession angelegten Datensatz beim ePark-Anbieter gelöscht.

Anhand von Zeichnungen sollen nachfolgend Ausführungsbeispiele zur Erfindung gegeben und einige Details und Aspekte nochmals erläutert werden. In den zugehörigen Zeichnungen zeigen:
- Fig. 1:: eine mögliche Ausbildungsform des erfindungsgemäßen Systems,
- Fig. 2:: eine weitere mögliche Ausbildungsform des Systems,
- Fig. 3:: ein Ablaufdiagramm für die Fahrt mit einem Kraftfahrzeug bei gestarteter Parksession,
- Fig. 4:: ein Ablaufdiagramm für die sich innerhalb einer Parksession beim Einparken beziehungsweise Einstellen eines Fahrzeugs in eine Parkanlage vollziehenden Abläufe,
- Fig. 5:: ein Ablaufdiagramm für die Abläufe beim Ausparken beziehungsweise Ausfahren des Kraftfahrzeugs aus der Parkanlage,
- Fig. 6:: ein Ablaufdiagramm für die Abläufe bei der Abrechnung eines Parkvorgangs,
- Fig. 7 bis 9:: einen Programmablaufplan für den Gesamtablauf einer durch die eP-App eröffneten Parksession,
- Fig. 10:: eine schematische Darstellung der On-Board-Einheit,
- Fig. 11:: eine schematische Darstellung des Frontends des ePark-Anbieter und seiner Kommunikation mit der Interfaceeinrichtung eines Kraftfahrzeugs und den elektronischen Einrichtungen eines Zahlungsdienstleisters,
- Fig. 12 - 14:: Aktivitätsdiagramme für die Abläufe im Frontend des ePark-Anbieters beim Login, beim Start der Parksession und bei der Vermittlung der Zahlung der Parkgebühren.

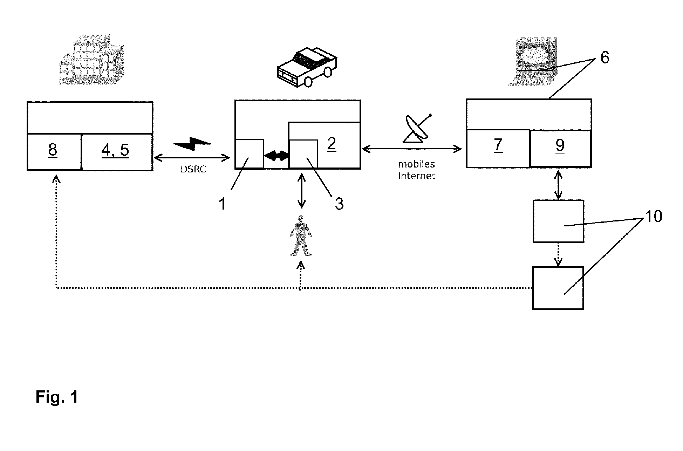

Die Fig. 1 zeigt eine mögliche Ausbildungsform des erfindungsgemäßen Systems mit dessen wesentlichen Komponenten in einer grobschematischen Darstellung. Es handelt sich hierbei um eine Ausbildungsform, bei welcher die On-Board-Einheit 1 und die Interfaceeinrichtung 2 eine integrale Einheit bilden, wobei die Interfaceeinrichtung 2 in Form einer Schnittstelle zu einem Infotainment-System oder als eine Multimediaschnittstelle (MMI) zu entsprechenden Geräten in dem Kraftfahrzeug ausgebildet ist. Die wesentlichsten Elemente des Systems sind demnach die in die Fahrzeugelektronik eines Fahrzeugs integrierte oder in dem Fahrzeug festgelegte On-Board-Einheit 1 und die Interfaceeinrichtung 2 (MMI) mit der darin ablaufenden Programmanwendung 3 beziehungsweise eP-App, wobei vorliegend, wie ausgeführt, die On-Board-Einheit 1 und die Interfaceeinrichtung 2 (MMI) eine integrale Einheit ausbilden. Die On-Board-Einheit 1 und die Interfaceeinrichtung 2 (MMI) sind demnach, zumindest während des Ablaufs des erfindungsgemäßen Verfahrens, durch die eP-App, das heißt die Programmanwendung 3 logisch miteinander verkoppelt. Sie sind aber bei dieser Ausführungsform darüber hinaus, aufgrund ihrer Anordnung in einer integralen Einheit, auch physisch aneinander gekoppelt.

Zum System gehören ferner die Kontrolleinrichtungen 4, 5 einer für die Durchführung des erfindungsgemäßen Verfahrens eingerichteten Parkanlage, nämlich eine Zufahrtkontrolleinrichtung 4 und eine Ausfahrtkontrolleinrichtung 5. Einen weiteren wichtigen Bestandteil bilden die elektronischen Einrichtungen 6 des ePark-Anbieters, deren Frontend 7 beim Ablauf des Verfahrens über das Internet mit der Interfaceeinrichtung 2 eines Nutzers beziehungsweise mit den Interfaceeinrichtungen der Nutzer des Systems und Verfahrens kommuniziert. Bestandteil der elektronischen Einrichtungen 6 des ePark-Anbieters sind ferner elektronische Einrichtungen, wie mit ein Backend 9, welches insbesondere in Interaktion mit den Einrichtungen 10 eines Zahlungsdienstleisters den eigentlichen Geldverkehr zur Begleichung für das Parken zu zahlender Beträge abwickelt. Als Zahlungsdienstleister wird insoweit ein Clearing-Partner, also beispielsweise die Bank eines Nutzers, oder aber auch ein zwischengeschalteter Dienstleister, ein so genannter Payment-Service-Provider, angesehen, über welchen die Abwicklung des eigentlichen Bezahlvorgangs mit dem Clearing-Partner läuft. Entsprechend dazu geschlossener Verträge erfolgt nach aus dem Onlinehandel bereits bekannter Prinzipien eine Verrechnung der Anteile der Einnahmen zwischen den am Ablauf beteiligten Partnern, also insbesondere zwischen dem ePark-Anbieter, dem oder den Zahlungsdienstleistern und dem Betreiber der Parkanlage.

Aus der Fig. 1 sind auch die wesentlichen Kommunikationsbeziehungen zwischen den Partnern beziehungsweise deren elektronischen Einrichtungen ersichtlich. So wird deutlich, dass ein entsprechender Datenaustausch, gesteuert durch die Programmanwendung 3 (eP-App) zwischen der On-Board-Einheit 1 in einem Kraftfahrzeug und den Kontrolleinrichtungen 4, 5 der Parkanlage erfolgt. Der Datenaustausch erfolgt über eine Funkverbindung, im Beispiel über eine DSRC-Verbindung (DSRC = Dedicated Short Range Communication), das heißt eine dedizierte Kurzbereichsverbindung. Ferner wird ersichtlich, dass über das Internet eine Kommunikation zwischen der mit der On-Board-Einheit 1 gekoppelten Interfaceeinrichtung 2 (MMI) und dem Frontend 7 des ePark-Anbieters erfolgt. Dazu asynchron läuft der eigentliche Zahlungsverkehr zur Entrichtung der bei einem Parkvorgang entstandenen Gebühren zwischen den beteiligten Partnern ab.

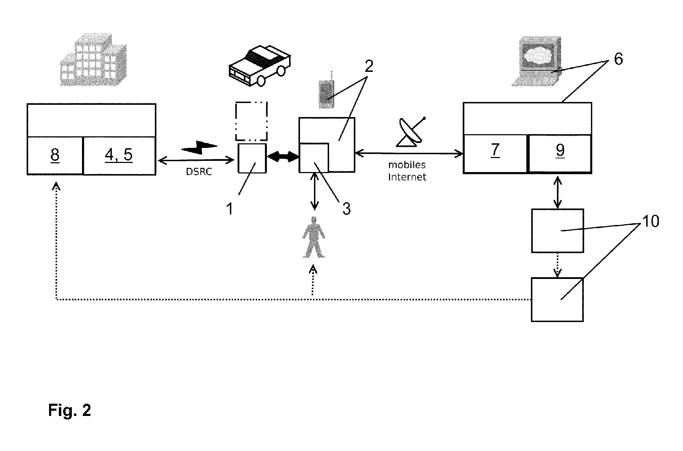

Die Fig. 2 zeigt eine gegenüber der Variante nach der Fig. 1 in Teilen geringfügig modifizierte Ausbildungsform des erfindungsgemäßen Systems. Hierbei handelt es sich um eine, hinsichtlich der Ausbildung der On-Board-Einheit 1 und der Interfaceeinrichtung 2, modulare Variante. Auch hierbei ist die On-Board-Einheit 1 in einem Kraftfahrzeug festgelegt. Sie ist dabei in Form eines in das Kraftfahrzeug eingebauten Gerätes ausgebildet, wie es ähnlich von bereits existierenden Mautsystemen bekannt ist. Als Interfaceeinrichtung 2 fungiert bei dieser Variante ein mobiles Endgerät eines Nutzers beziehungsweise eines Fahrzeugführers, wie beispielsweise ein Smartphone, welches eine Verarbeitungseinheit aufweist, die zur Verarbeitung der eP-App ausgebildet ist. Beim Ablauf des Verfahrens wird zwischen der On-Board-Einheit 1 und der Interfaceeinrichtung 2 durch die eP-App eine Kopplung hergestellt. Im Hinblick auf den dazu erforderlichen Datenaustausch zwischen der On-Board-Einheit 1 und der Interfaceeinrichtung 2 kann diese Kopplung physisch durch eine Bluetooth- oder eine WLAN-Verbindung, also eine Funkverbindung, oder durch eine Infrarotverbindung gestützt sein. Vorzugsweise kommt für den Datenaustausch das rSAP, also das Remote-SIM-Access-Protokoll zum Einsatz. Darüber hinaus sind die zwischen den Partnern und deren elektronischen Einrichtungen bestehenden Beziehungen identisch mit den zur Fig. 1 erläuterten.

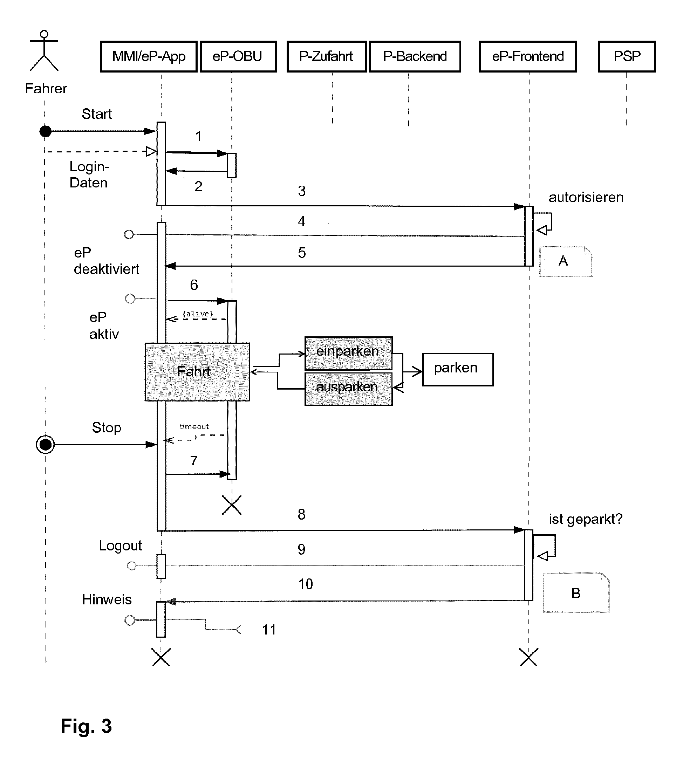

Die Fig. 3 zeigt ein Ablaufdiagramm betreffend die sich im Hinblick auf eine eröffnete beziehungsweise gestartete Parksession bei einer Autofahrt vollziehenden Abläufe. Diese gestalten sich demnach wie folgt:
- Start:: Eine ePark-Session beginnt dadurch, dass der Nutzer/Autofahrer die eP-App auf der Interfaceeinrichtung (MMI), also (im Falle der hinsichtlich On-Board-Einheit = eP-OBU und Interfaceeinrichtung modularen Variante des Systems) auf einem mobilen Endgerät, beispielsweise seinem Smartphone startet oder sich (im Falle der integralen Variante) an der Multimediaschnittstelle des Fahrzeugs identifiziert und dort die eP-App (eP-App) aktiviert.
- 1, 2:: Die eP-App versucht einen Verbindungsaufbau zu einer On-Board-Einheit (eP-OBU) und holt sich deren ID ab.
- 3:: Die eP-App sendet die vom Nutzer eingegebenen oder (bei Autologin) in der eP-App hinterlegten Login-Daten sowie die ID der On-Board-Einheit (eP-OBU) an das Frontend (eP-Frontend) des ePark-Anbieters.
- 4:: Ist der Verbindungsaufbau zur On-Board-Einheit (eP-OBU) oder der Login am System gescheitert oder wurde die ID der On-Board-Einheit (eP-OBU) für diesen Nutzer nicht freigegeben (zum Beispiel bei Sperre durch den Parkdienst-Anbieter beziehungsweise ePark-Anbieter), geht ein Fehlercode an die eP-App und die Parksession wird beendet.
- 5:: Hat sich der Nutzer erfolgreich am Frontend (eP-Frontend) des ePark-Anbieters autorisiert erfolgreich, wird durch die elektronischen Einrichtungen des ePark-Anbieters (das ePark-System) ein sessionbezogener Datensatz mit den Kundendaten und der ID der On-Board-Einheit (eP-OBU) angelegt. Die Session wird in der eP-App frei gegeben und auf dem Display des mobilen Endgerätes oder der Multimediaschnittstelle die Teilnahme am ePark-Verfahren, das heißt dem erfindungsgemäßen Verfahren angezeigt.
Für 4. und 5. werden als "A" zur Prüfung herangezogen: Eine User-ID (erhält der Nutzer/Fahrzeugführer bei der Anmeldung beim ePark-Anbieter) und die ID der On-Board-Einheit (eP-OBU).
- 6:: Die On-Board-Einheit (eP-OBU) wird aktiviert und deren Erreichbarkeit in regelmäßigen Abständen überprüft.
- 7:: Beendet der Nutzer beziehungsweise Fahrzeugführer von sich aus die Parksession oder erhält die eP-App innerhalb einer festgelegten Zeitspanne keine Rückmeldung wird die Verbindung zur On-Board-Einheit (eP-OBU) definiert beendet.
- 8:: Die eP-App überträgt den Wunsch, die Teilnahme an ePark-Verfahren für diese Fahrt zu beenden (oder einen Abbruch wegen Timeout), an das Frontend (eP-Frontend) des ePark-Anbieters und damit an dessen ePark-System. Dieses prüft, ob in der Zwischenzeit anderweitig ein abrechnungsrelevanter Parkvorgang eingeleitet wurde.

- 9:: Sind keine Parkgebühren offen wird die eP-App vom System abgemeldet, der Session-Datensatz geschlossen/gespeichert und der erfolgreiche Logout auf dem Display des Kunden angezeigt.
- 10:: Kann die Parksession wegen eines bestehenden und noch nicht abgerechneten Parkvorgangs nicht beendet werden erhält der Autofahrer einen Hinweis mit Angabe der Parkanlage, bei der die On-Board-Einheit (eP-OBU) noch angemeldet ist. Die Session geht in einen "pending"-Status ("anhängig").
Für 9. und 10. werden als "B" zur Prüfung herangezogen: Die User-ID, die ID der On-Board-Einheit (eP-OBU) und Parkdaten.
- 11:: Die weitere Behandlung der Session im "pending"-Status hängt von der Strategie des Anbieters beziehungsweise der Art des Teilnehmer-Verhältnisses ab. So könnte zum Beispiel der Logout für ein im firmeneigenen Parkhaus abgestelltes Fahrzeug während der Regelarbeitszeit kostenfrei erlaubt sein, am Wochenende oder nach Feierabend nur nach Bezahlen einer Gebühr. Für Car-Sharing Unternehmen oder Autovermieter kann das Abstellen (und damit der Fahrer-Logout) eines bei den Einrichtungen des ePark-Anbieters eingebuchten Fahrzeugs einen explizit gewollten Anwendungsfall darstellen, wenn zum Beispiel für die Fahrzeuge feste Stellplatzkontingente eingerichtet sind. Bei Verwendung eines privaten mobilen Endgerätes wird der Nutzer in den meisten Fällen dieses nach dem Einparken nicht im Auto lassen sondern mitnehmen wollen. Auch in diesem Fall verliert die eP-App die Verbindung zur On-Board-Einheit (eP-OBU), die Park-Session geht in den "pending"-Modus. Kehrt der Fahrer zurück synchronisieren sich eP-App und On-Board-Einheit (eP-OBU) wieder und die Session wird fortgesetzt.

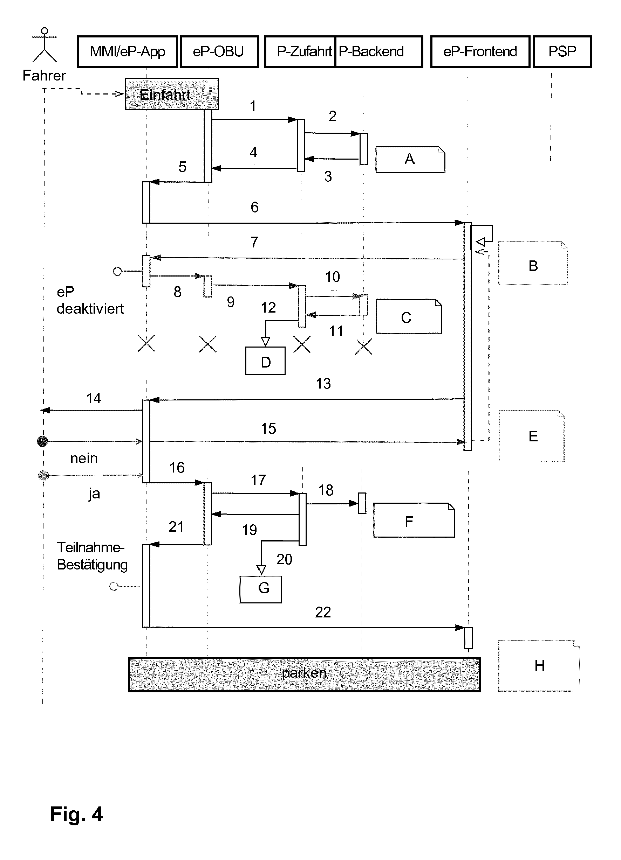

Die Fig. 4 zeigt ein Ablaufdiagramm betreffend die sich entsprechend dem erfindungsgemäßen Verfahren beim Einstellen eines dafür eingerichteten Kraftfahrzeugs in eine dafür eingerichtete Parkanlage gemäß einem Beispiel vollziehenden Abläufe. Diese gestalten sich demnach beginnend mit der Anfahrt zur Parkanlage wie folgt:
- 1, 2:: Die während der Fahrt aktive On-Board-Einheit (eP-OBU) sendet ihre ID an einen Sende- und Empfangsmittels der Zufahrtkontrolleinrichtung (P-Zufahrt) an Zufahrt der Parkanlage sobald sich die Sende- und Empfangsmittel der Zufahrtkontrolleinrichtung und der On-Board-Einheit (eP-OBU) zueinander in Reichweite befinden. Die Zufahrtkontrolleinrichtung leitet die ID an die Backendeinrichtungen der Parkanlage (P-Backend) weiter. Dort wird ein Datensatz mit der ID der On-Board-Einheit (eP-OBU) und der aktuellen Uhrzeit angelegt.
- 3, 4, 5:: Die Einparkzeit und eine Kennung der Parkanlage (P-Kennung) gehen über die Zufahrtkontrolleinrichtung an der Zufahrt der Parkanlage und die On-Board-Einheit (eP-OBU) in dem Kraftfahrzeug zurück an die eP-App. Hierbei können zusätzliche Informationen wie ein individueller Begrüßungstext, die geltenden Parktarife oder Werbeeinblendungen mitgegeben werden.
Als "A" werden von den Backendeinrichtungen in Zuordnung zur ID der On-Board-Einheit (eP-OBU) bereitgestellt: Eine Kennung der Parkanlage (P-Kennung) und die Einfahtzeit.
- 6:: Die eP-App sendet die Kennung der Parkanlage und den Einfahrt-Zeitstempel an das ePark-System, das heißt an das Frontend (eP-Frontend) des ePark-Anbieters. Dieses prüft, ob die P-Kennung für das erfindungsgemäße Verfahren (ePark-Verfahren) zugelassen ist und ob die On-Board-Einheit (eP-OBU) und damit der über die Interfaceeinrichtung (MMI) und die darin ablaufende eP-App zum Einfahrtzeitpunkt an dem Verfahren teilnehmen darf. Geprüft wird ferner, ob schon ein anderer Parkvorgang für dieselbe On-Board-Einheit (eP-OBU) aktiv und ein Clearing für den Nutzer möglich ist. Insoweit muss zumindest ein unterstütztes Bezahlverfahren für den Nutzer freigegeben sein.
- 7:: Tritt ein Fehler bei der Überprüfung auf oder ist die Teilnahme an dem erfindungsgemäßen Verfahren auf Grund des Prüfungsergebnisses nicht zulässig, geht ein entsprechender Abbruch-Code an die eP-App, die den Abbruch dem Nutzer über das als Interfaceeinrichtung fungierende mobile Endgerät oder über das Multimediainterface MMI (integrale Variante) anzeigt. Die durch den Parkvorgang anfallende Gebühr muss nach den bisher üblichen Verfahren bezahlt werden.
In 6. und 7. werden als "B" für die Prüfung herangezogen: Die User-ID, die ID der On-Board-Einheit (eP-OBU), die P-Kennung und die Einfahrtzeit.
- 8 - 11:: Zeitgleich wird der Abbruch über die On-Board-Einheit (eP-OBU) und die Zufahrtkontrolleinrichtung an die Backendeinrichtungen der Parkanlage (P-Backend) gemeldet. Zusammen mit dem Abbruch-Code wird dort der Datensatz dieses Parkvorgangs seitens des ePark-Anbieters für eine später eventuell notwendige Nachverfolgung gespeichert. Im Zusammenhang mit dem Abbruch werden als "C" in Zuordnung zur ID der On-Board-Einheit (eP-OBU) die Einfahrtzeit und ein Abbruch-Code zur Verfügung gestellt.
- 12:: Der Ausschluss einer Nutzung des erfindungsgemäßen Verfahrens (ePark-Verfahren) durch den Nutzer führt in den Einrichtungen der Parkanlage zur Umschaltung auf die konventionelle Funktionsweise, und somit zur Ausgabe "D", nämlich zum Beispiel zur Ausgabe einer Magnetstreifen-Karte an der Zufahrtkontrolleinrichtung beziehungsweis der Einfahrt-Schranke.
- 13, 14:: War hingegen die Prüfung im Schritt 7 erfolgreich, wird die Teilnahme am erfindungsgemäßen Verfahren für diesen Parkvorgang vom System akzeptiert. Auf einem Display der Interfaceeinrichtung, also des Multimediainterfaces (MMI) im Kraftfahrzeug oder des mobilen Endgeräts beziehungsweise Smartphones erscheint neben einer Freigabe-Bestätigung ein Abfrage-Menü, ob der Fahrer das Bezahlen über ePark-Verfahren tatsächlich nutzen möchte.
- 15:: Lehnt der Nutzer die Verwendung des ePark-Verfahrens für diesen Parkvorgang ab, werden die gleichen Schritte durchlaufen wie bei einem Abbruch durch das System (Schritte 8-12). Damit in den von den Einrichtungen des ePark-Anbieters gehaltenen Datensatz ein entsprechender Abbruch-Code geschrieben werden kann meldet die eP-App die Ablehnung an dessen Frontend (eP-Frontend) und beendet die Park-Session.
In 13. bis 15. werden als "E" für die Prüfung herangezogen: Die User-ID, die ID der On-Board-Einheit (eP-OBU), die P-Kennung und die Einfahrtzeit sowie im Falle des Abbruchs aufgrund negativen Prüfungsergebnisses ein Abbruch-Code bereitgestellt.
- 16 - 18:: Die aktive Teilnahme an ePark-Verfahren wird von der eP-App über die On-Board-Einheit (eP-OBU) an die Zufahrtkontrolleinrichtung gemeldet. Diese gibt die Durchfahrt frei und sendet eine Freigabe-Information an die Backendeinrichtungen (P-Backend) der Parkanlage.
In 18. werden durch die Backendeinrichtungen (P-Backend) in Zuordnung zur ID der On-Board-Einheit (eP-OBU) als "F" die Einfahrtzeit bereitgestellt und die Einfahrtfreigabe erteilt.
- 19 - 21:: Die Tatsache, dass die Durchfahrt tatsächlich frei gegeben wurde, wird über die On-Board-Einheit (eP-OBU) auch an die eP-App gemeldet. Sie zeigt dem Autofahrer auf einem Display der Interfaceeinrichtung (MMI) die Startzeit des Parkvorgangs, gegebenenfalls zusammen mit einer Anweisung an, wie er sich zu verhalten hat, falls er zum Beispiel wegen eines Hindernisses die Schranke nicht passieren konnte.
In "G" gibt die Zufahrtkontrolleinrichtung der Parkanlage, zum Beispiel durch Heben einer Schranke, die Einfahrt frei.
- 22:: Die Einfahrt in die Parkanlage wird im Datensatz des ePark-Systems, gespeichert, wobei dazu eine entsprechende Information an das Frontend (eP-Frontend) der elektronischen Einrichtungen des ePark-Anbieters übermittelt wird. Ab diesem Zeitpunkt gilt das Fahrzeug als geparkt.
In dem Datensatz werden mit "H" erfasst: Die ID der On-Board-Einheit (eP-OBU) die User-ID, die P-Kennung, die Einfahrtzeit und ein Kennzeichen, wonach die Einfahrt freigegeben wurde und demnach das Fahrzeug als "ist geparkt" gekennzeichnet werden kann

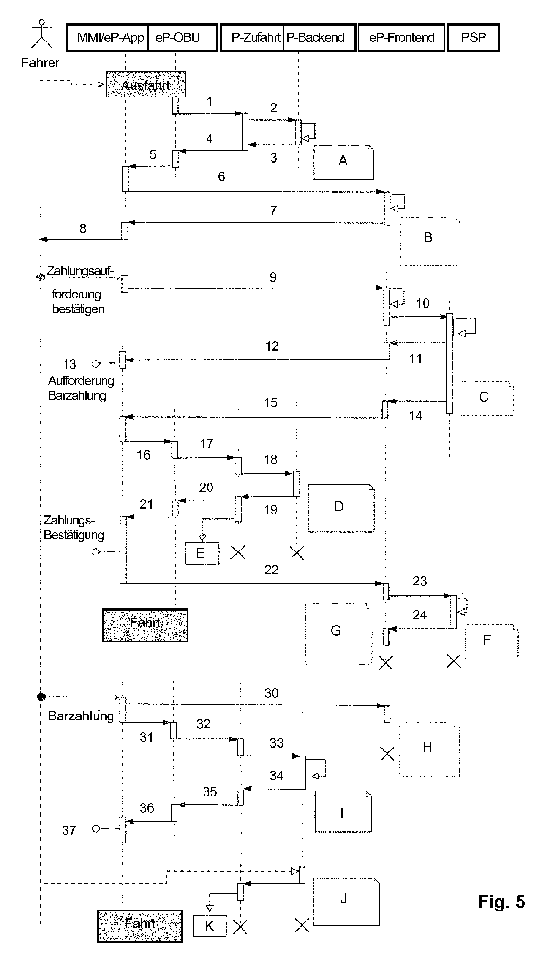

Die Fig. 5 stellt ein Ablaufdiagramm zu den möglichen Abläufen bei der Ausfahrt aus einer Parkanlage im Falle der Nutzung des erfindungsgemäßen Systems dar. Im Gegensatz zu üblichen, aus dem Stand der Technik bekannten Verfahren muss ein Nutzer des erfindungsgemäßen Verfahrens vor der Ausfahrt aus der Parkeinrichtung nicht erst zum Parkautomat oder zu einem Kassen-Schalter um dort die Parkgebühr zu bezahlen. Er kann sich gleich in sein Kraftfahrzeug setzen und losfahren bis zur Ausfahrtkontrolleinrichtung 5 beziehungsweise bis vor die Schranke an der Ausfahrt der Parkanlage. Es vollzieht sich folgender Ablauf:
- 1, 2:: An der Ausfahrtkontrolleinrichtung sendet die On-Board-Einheit (eP-OBU) wieder ihre ID aus, welche von der Ausfahrtkontrolleinrichtung die Backendeinrichtungen der Parkanlage (P-Backend) weitergeleitet wird. Diese errechnen aus dem aktuellen Zeitstempel (der Ausfahrtzeit) und der im Datensatz hinterlegten Einfahrtzeit eine Brutto-Parkgebühr.
- 3 - 6:: Über die Ausfahrtkontrolleinrichtung und die On-Board-Einheit (eP-OBU) beziehungsweise deren Sende- und Empfangsmittel sowie über die eP-App wird der Betrag für die Parkgebühr zusammen mit dem Ausfahrt-Zeitstempel an das Frontend (eP-Frontend) des ePark-Anbieters und damit an dessen elektronische Einrichtungen übertragen. Hierzu werden in 3 durch die Backendeinrichtungen der Parkanlage (P-Backend) in Zuordnung zu der ID der On-Board-Einheit (eP-OBU) als "A" bereitgestellt: Die Einfahrtzeit, ein Kennzeichen zu der früher erfolgten Einfahrtfreigabe und der Brutto-Betrag der Parkgebühren.
- 7:: Seitens des ePark-Anbieters, also durch dessen elektronische Einrichtungen wird durch Verrechnung mit Gutschriften und/oder unter Berücksichtigung von teilnehmerbezogenen Tarifen die netto zu zahlende Parkgebühr ermittelt. Ferner werden die für diesen Parkvorgang erlaubten Bezahlverfahren ermittelt.
In 7. werden in Zuordnung zu der ID der On-Board-Einheit (eP-OBU) als "B" berücksichtigt: Die User-ID, die P-Kennung der Parkanlage, die Einfahrtzeit und ein Kennzeichen zu der früher erfolgten Einfahrtfreigabe sowie durch das Frondend (eP-Frontend) des ePark-Anbieter der Netto-Betrag der Parkgebühren bereitgestellt.
- 8:: Das Ergebnis (Brutto-Summe und Bezahlverfahren) wird an die eP-App gesendet und auf einem Display der Interfaceeinrichtung, also auf dem Multimediainterface (MMI) im Kraftfahrzeug oder auf dem mobilen Endgerät beziehungsweise Smartphone oder Tablet-PC des Nutzers angezeigt. Der Nutzer kann sich nun für ein Bezahlverfahren entscheiden oder auf Barzahlung ausweichen
- 9:: Hat der Nutzer die Bezahlung unter Nutzung des erfindungsgemäßen Verfahrens (ePark-Verfahren) gewählt, sendet die eP-App diese Entscheidung und das ausgewählte Bezahlverfahren an das Frontend (eP-Frontend) des ePark-Anbieters.
- 10:: Innerhalb elektronischen Einrichtungen des ePark-Anbieters werden eine Pay-TID generiert und der zu zahlende Betrag bei dem zum gewählten Bezahlverfahren gehörenden Payment-Service-Provider (PSP) reserviert. Der PSP gibt eine Statusmeldung über das Ergebnis der Reservierung an die elektronischen Einrichtungen des ePark-Anbieters zurück.
- 11:: Tritt bei der Reservierung des Zahlungsbetrags beim Zahlungsvermittler beziehungsweise Payment-Service-Provider (PSP) ein Fehler auf, schließen sich die Schritte 12 und 13 an.
- 12, 13:: Im Falle eines Fehlers gemäß 11 erhält der Autofahrer über die eP-App die Aufforderung bar zu bezahlen. Alle weiteren Schritte sind dann identisch mit der absichtlichen Auswahl dieses des Barzahlungsverfahrens (Schritte 30 - 37).
- 14:: Ist die Reservierung des Zahlungsbetrags erfolgreich, schließen sich die Schritte 15 - 18 an.
- 15 - 18:: War die Reservierung des Zahlungsbetrags erfolgreich, ist also die Belastung des Nutzers mit dem zu zahlenden Betrag bei einem Clearing-Partner oder auf einem Konto eines Zahlungsvermittlers Payment-Service-Providers (PSP) möglich, sendet die eP-App die Pay-TID über die Ausfahrtkontrolleinrichtung an die Backendeinrichtungen der Parkanlage (P-Backend). Die Pay-TID entspricht einer Quittung über den gezahlten Betrag. Damit ist für die elektronischen Einrichtungen der Parkanlage der Zahlungsvorgang erfolgreich abgeschlossen, die Ausfahrt kann frei gegeben werden.
Für die Prüfvorgänge und Abläufe gemäß 10 bis 18 werden, wie teilweise bereits angegeben, als "C" berücksichtigt: Ein Pay-Account des Nutzers, die Pay-TID, der Netto-Betrag der Parkgebühren und, im Falle der erfolgreichen Reservierung ein "reserved"-Merkmal.
- 19 - 21: Das Signal "E" zum Öffnen der Schranke geht von der Ausfahrtkontrolleinrichtung und deren Sende- und Empfangsmittel zusätzlich über die On-Board-Einheit (eP-OBU) und deren Sende- und Empfangsmittel auch an die eP-App. Die freie Fahrt wird dem Nutzer zusammen mit einer Zahlungsbestätigung angezeigt. Als "D" finden hierbei Berücksichtigung: Die ID-der On-Board-Einheit (eP-OBU), die Einfahrtzeit, das Kennzeichen über die früher erteilte Einfahrtfreigabe, der Brutto-Betrag der Parkgebühr, die Pay-TID und ein die Ausfahrtfreigabe betreffendes Kennzeichen.
- 22, 23:: Während der Nutzer die Ausfahrt-Schranke passiert sendet die eP-App die Meldung über die frei gegebene Ausfahrt an das ePark-System, das heißt über das Frontend (eP-Frontend) des ePark-Anbieters an dessen elektronische Einrichtungen. Diese machen eine Forderung gegenüber dem Zahlungsdienstleiter beziehungsweise Payment-Service-Provider (PSP) geltend, was gleichbedeutend ist mit dem Auftrag, ein Konto des Nutzers mit dem angeforderten Betrag abschließend zu belasten.
- 24:: Die erfolgreiche Geltendmachung der Forderung wird vom PSP an das ePark-System, das heißt die Einrichtungen des ePark-Anbieters gemeldet. Dort wird der Datensatz zur Nachverarbeitung (periodische Abrechnung und gegebenenfalls weiteres) geschlossen und gespeichert. War die Geltendmachung der Forderung nicht erfolgreich muss der Bezahlvorgang an Hand der Reservierungsdaten im Nachgang geklärt werden. Der Autofahrer kann seine Fahrt fortsetzen und einen neuen Parkvorgang einleiten. Konnte er trotzt geöffneter Schranke die Parkeinrichtung nicht verlassen bevor sich die Schranke wieder geschlossen hat (zum Beispiel bei Stau) sind für diesen Fall vom Betreiber der Parkanlage ähnliche Maßnahmen vorzusehen wie bei den bisher üblichen Verfahren.
Im Zusammenhang mit den Abläufen gemäß 24. finden als "F" Berücksichtigung: Angaben zum Pay-Account des Nutzers, die Pay-TID un der Netto-Betrag der Parkgebühr. Zur Geltendmachung der Gebühr werden als "G" herangezogen: Die User-ID, die ID der On-Board-Einheit (eP-OBU), die P-Kennung der Parkanlage, die Einfahrtzeit, das Kennzeichen über die früher erfolgte Einfahrtfreigabe, der Nett-Betrag der Parkgebühr, die Pay-TID und das Kennzeichen über die Ausfahrtfreigabe.
- 30 - 33:: Entscheidet sich der Autofahrer für eine Barzahlung oder bestätigt er diese bei einem Hinweis des ePark-Systems auf Fehler bei der Reservierung des Zahlungsbetrags, so geht diese Information über die Ausfahrtkontrolleinrichtung an die Backendeinrichtungen der Parkanlage (P-Backend) und gleichzeitig an das Frontend (eP-Frontend) des ePark-Anbieters. Beim Frontend (eP-Frontend) wird der entsprechende ParkDatensatz unter Berücksichtigung von "H" (der User-ID, der ID der On-Board-Einheit, das heißt der eP-OBU, der P-Kennung, der Einfahrtzeit, dem Kennzeichen über die früher erfolgte Einfahrtfreigabe, dem Netto-Betrag der Parkgebühr und einem Merkmal für die Barzahlung) als Barzahlung abgeschlossen.
- 34 - 36:: Im Falle der Barzahlung wird in den Backendeinrichtungen der Parkanlage (P-Backend) eine einmalige Park-TAN generiert, in den zugehörigen Datensatz eingetragen und über die Ausfahrtkontrolleinrichtung und die On-Board-Einheit (eP-OBU) zurück an die eP-App gesendet. Optional ist aber auch die Ausgabe eines konventionellen Park-Tickets anstatt der Park-TAN möglich.
Für die Erzeugung der Park-TAN werden als "I" herangezogen: Die ID der On-Board-Einheit (eP-OBU) die Einfahrtzeit, das Kennzeichen über die früher erfolgte Einfahrtfreigabe und der Brutto-Betrag der Parkgebühr.
- 37:: Der Nutzer bekommt die Park-TAN auf einem Display angezeigt, zusammen mit Informationen, wo und wie er die Parkgebühren bar bezahlen kann. Mit der Park-TAN oder dem Ticket werden die Gebühren wie bisher üblich am Automat oder an einem Schalter bezahlt und die Ausfahrt kann frei gegeben, also beispielsweise mit "K" eine Schranke der Ausfahrtkontrolleinrichtung gehoben werden.
Im Zusammenhang mit der Freigabe der Ausfahrt im Falle der Barzahlung finden als "J" Berücksichtigung: Die ID der On-Board-Einheit (eP-OBU), die Einfahrtzeit, das Kennzeichen über die früher erfolgte Einfahrtfreigabe, der Brutto-Betrag der Parkgebühr, die Park-TAN ein Kennzeichen für die Ausfahrtfreigabe.

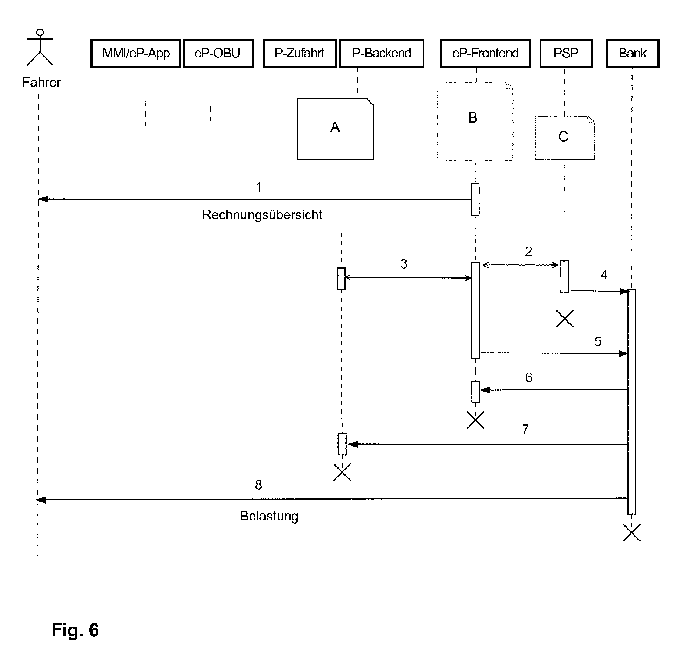

Für jeden nach dem erfindungsgemäßen Verfahren abgewickelten Parkvorgang wird in den Backendeinrichtungen 8 der Parkanlage, im Frontend 7 der Einrichtungen des ePark-Anbieters und beim Zahlungsdienstleister, das heißt beim Payment-Service-Provider ein Datensatz angelegt. Als durchgängiger Zuordnungs-Schlüssel dient die Pay-TID. Ein möglicher Ablauf des eigentlichen Bezahlvorgangs ist in dem Ablaufdiagramm gemäß Fig. 6 dargestellt. Dieser gestaltet sich wie folgt:
- 1:: Um einem Nutzer einen aktuellen Überblick über die auf seinem ePark-Konto angefallenen Parkgebühren zu ermöglichen stellt das ePark-Frontend, also das Frontend (eP-Frontend) des ePark-Anbieters eine zugangsgeschützte Übersichtsseite mit allen Rechnungsdaten bereit.
- 2, 3:: Abhängig von den vertraglichen Beziehungen zwischen dem Betreiber der Parkanlage, Parkdienstanbieter (ePark-Anbieter) und dem jeweiligen Zahlungsdienstleister beziehungsweise Payment-Service-Provider (PSP) werden die Datensätze zu den abrechenbaren Parkvorgängen abgeglichen und konsolidiert.
- 4, 5:: die ePark-Anbieter und die PSP erstellen auf der Grundlage der geprüften Datensätze Abrechnungen und reichen diese zur Verrechnung bei den Clearing-Partnern von Nutzern (meist Banken) ein.
- 6 - 8:: Die Clearing-Partner schreiben den am Verfahren teilnehmenden Betreibern von entsprechenden, dazu eingerichteten Parkanlagen und dem jeweiligen Parkdienstanbieter die eingeforderten Beträge gut und belasten entsprechend die Konten der Nutzer des erfindungsgemäßen Verfahrens und Systems.
Im Rahmen der vorgenannten Vorgänge finden als "A" Berücksichtigung: Die ID der On-Board-Einheit (eP-OBU), die Einfahrtzeit, das Kennzeichen über eine erfolgte Einfahrtfreigabe, der Brutto-Betrag der Parkgebühr die Pay-TID und das Kennzeichen über die Ausfahrtfreigabe.
Als "B" finden im Bereich des Frontend (eP-Frontend) des ePark-Anbieters Berücksichtigung: Die User-ID, die ID der On-Board-Einheit (eP-OBU), die P-Kennung, die Einfahrtzeit, das Kennzeichen über eine erfolgte Einfahrtfreigabe, der Netto-Betrag der Parkgebühr die Pay-TID und das Kennzeichen über die Ausfahrtfreigabe.
Als "C" finden beim PSP Berücksichtigung: Der Pay-Account des Nutzers, die Pay-TID und ein Kennzeichen über die Nutzung des elektronischen Verfahrens zur Zahlung der Parkgebühren unter Inanspruchnahme der Dienstleistung des ePark-Anbieters.

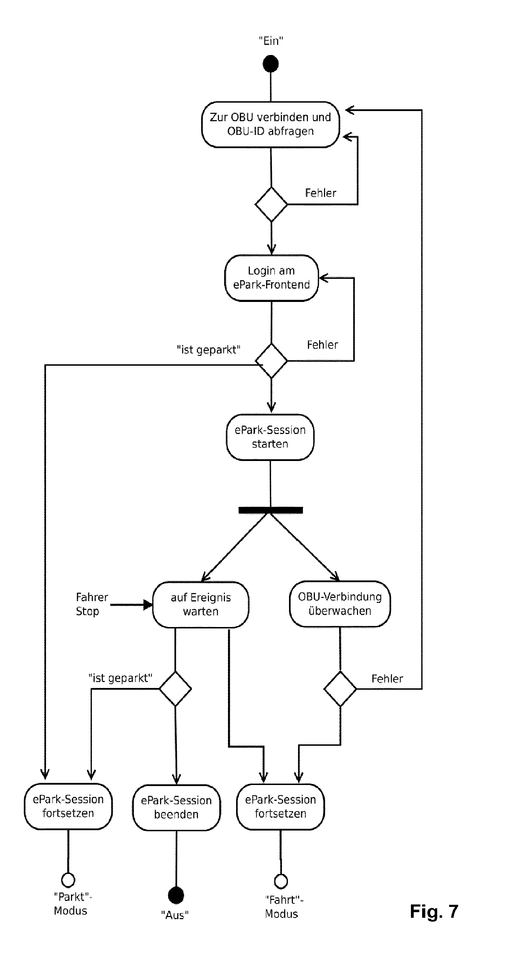

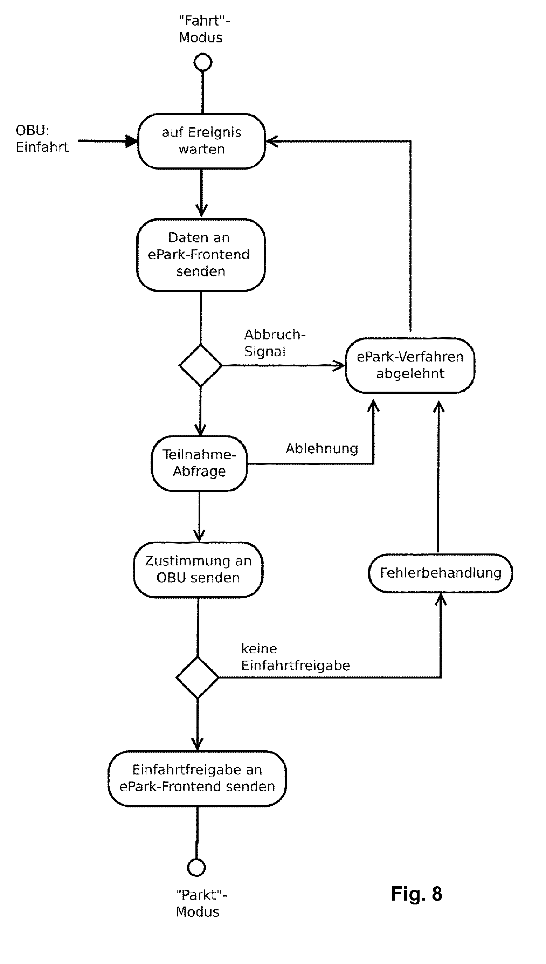

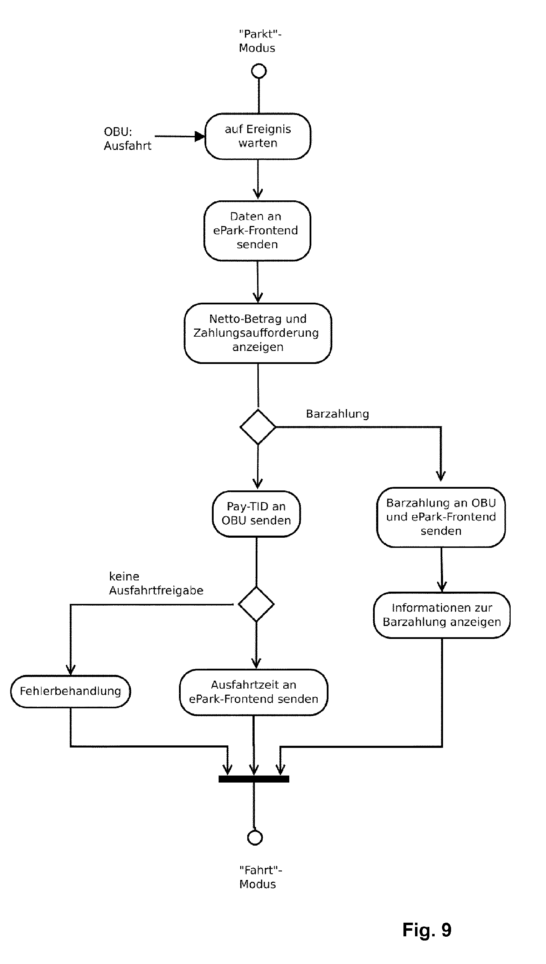

Einen Programmablaufplan der eP-App zeigen die Fig. 7 - 9. Die eP-App ist ein Internet-Client des ePark-Systems, also des erfindungsgemäßen Systems. Sie bildet auf der Softwareebene die nutzerseitige Schnittstelle zum Frontend (eP-Frontend) beim ePark-Anbieter. Durch die weite Verbreitung von internetfähigen mobilen Endgeräten, wie Smartphones und Tablet-PCs sind mobile Programmanwendungen (Apps) heute Stand der Technik. An die Programmanwendung 3 (die eP-App) werden aus der Sicht eines Programmierers keine besonderen Anforderungen gestellt. Sie kann problemlos für alle Betriebssystem erstellt werden und stellt ihrerseits auch keine besonderen Anforderungen an die Hardware. Um die jeweiligen Signale der On-Board-Einheit 1 über die Interfaceeinrichtung 2 an das Frontend des Parkdienstanbieters beziehungsweise des ePark-Anbieters übertragen zu können, muss die eP-App im Falle der hinsichtlich der On-Board-Einheit 1 und der Interfaceeinrichtung 2 modularen Ausbildung des Systems Zugriff auf die externen Schnittstellen des mobilen Endgerätes (des Smartphones oder dergleichen) haben. Nach dem Starten der eP-App wir eine Parksession eröffnet und jeweils eine Verbindung zur On-Board-Einheit 1 und zum Frontend 7 des ePark-Anbieters aufgebaut. So lange der Nutzer beziehungsweise der Fahrzeugführer die eP-App beziehungsweise die Parksession nicht stoppt oder ein entsprechendes Signal von der On-Board-Einheit 1 eintrifft, läuft die eP-App im "Fahrt-Modus". Meldet die On-Board-Einheit 1 die Einfahrt in eine erfindungsgemäß eingerichtete Parkanlage, wird in den "Parkt-Modus" gewechselt bis von der On-Board-Einheit 1 das Signal mit einer Information über die Ausfahrt aus der Parkanlage gesendet wird. Innerhalb einer Parksession wird die Verbindung zur On-Board-Einheit 1 ständig überwacht und nach einem Verbindungsabbruch der letzte Status auf Grund der Daten im Frontend 7 des ePark-Anbieters wieder hergestellt.

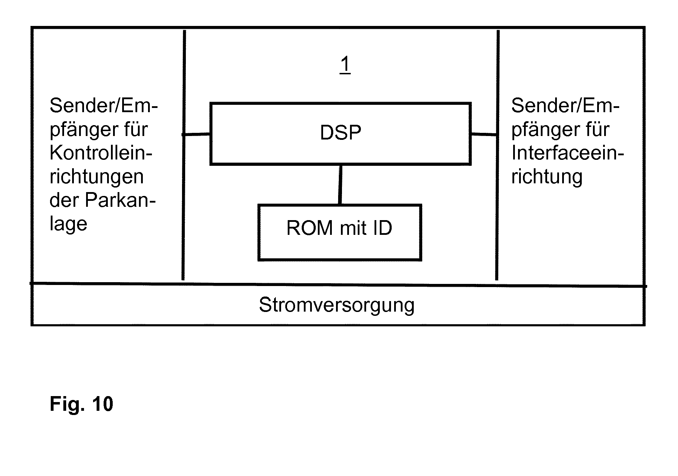

Die Fig. 10 zeigt eine grobschematische Darstellung einer On-Board-Einheit 1, wobei es sich bei der hier beispielhaft gezeigten Ausbildungsform um eine On-Board-Einheit 1 einer modularen Variante gemäß der Fig. 2 handelt. Die On-Board-Einheit 1 verfügt über eine Zentraleinheit, nämlich einen digitalen Signalprozessor (DSP) mit Zugriff zumindest auf einen nur Lesespeicher, in welchem die eindeutige ID der On-Board-Einheit 1 gespeichert ist. Darüber hinaus ist die On-Board-Einheit 1 mit Sende- und Empfangsmitteln für einerseits die Kommunikation mit den Kontrolleinrichtungen 4, 5 einer Parkanlage und für andererseits die Kommunikation mit der hier nicht gezeigten Interfaceeinrichtung 2 und der auf dieser ablaufenden Programmanwendung 3 (eP-App) ausgestattet. Selbstverständlich gehört darüber hinaus zu der On-Board-Einheit 1 eine Stromversorgung zur Versorgung ihrer Baugruppen mit elektrischer Energie.

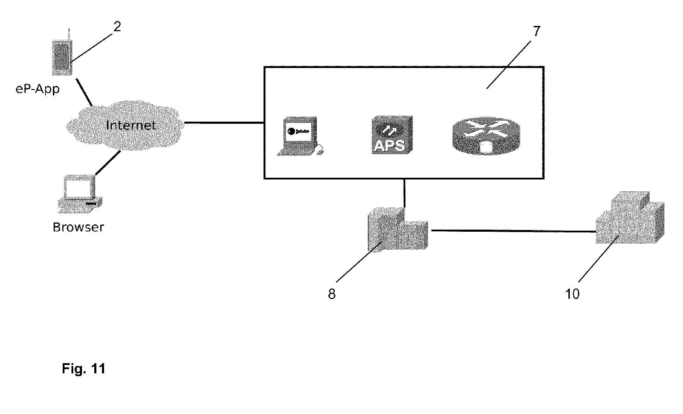

Die Fig. 11 zeigt eine grobschematische Darstellung der elektronischen Einheiten 6 des ePark-Anbieters mit dem Frontend 7 und der Kommunikation des Frontends 7 mit der Interfaceeinrichtung 2 eines das System beziehungsweise Verfahren nutzenden Kraftfahrzeugführers sowie zwischen dem Backend 9 des ePark-Anbieters und den elektronischen Einrichtungen 10 eines Finanzdienstleisters. Hierbei wird ersichtlich, dass die elektronischen Einrichtungen 6 des ePark-Anbieters, insbesondere dessen Frontend 7, mittels einer oder mehrerer Server realisiert sind und Bestandteil des Frontends 7 eine Datenbank zur Verwaltung von Kundendaten, also Daten bei dem ePark-Anbieter zur Nutzung des Verfahrens angemeldeter Kraftfahrzeugführer, umfasst. Auch ist ersichtlich, dass die Kommunikation zwischen der Interfaceeinrichtung 2 eines Fahrzeugführers beziehungsweise der auf dieser ablaufenden eP-App und dem Frontend 7 der elektronischen Einrichtungen 6 über das Internet erfolgt. Die Kommunikation zwischen den elektronischen Einrichtungen 6 des ePark-Anbieters und den elektronischen Einrichtungen 10 des Zahlungsdienstleisters kann über ein gesondertes Weitverkehrsnetz oder ebenfalls über das Internet erfolgen. Durch das links in der Abbildung dargestellte Symbol eines PCs soll verdeutlicht werden, dass die Anmeldung beim ePark-Anbieter zur Nutzung des Systems beziehungsweise Verfahrens, also die Einrichtung eines Accounts beziehungsweise einer Mitgliedschaft beim ePark-Anbieter, durch einen Nutzer auch über den heimischen PC erfolgen kann.

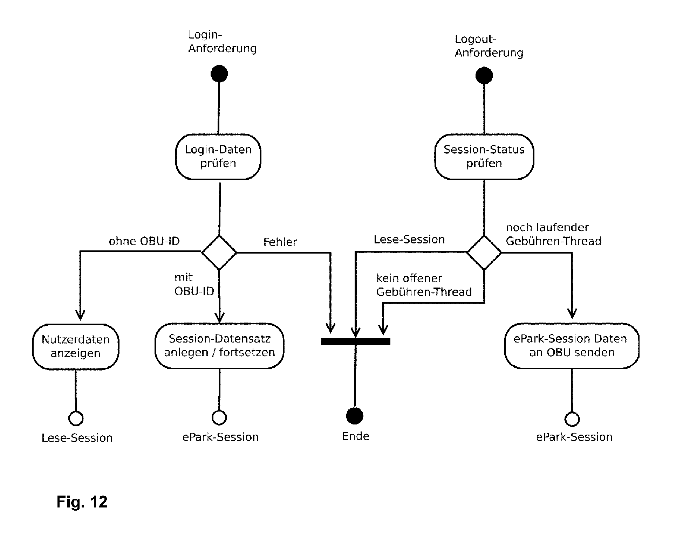

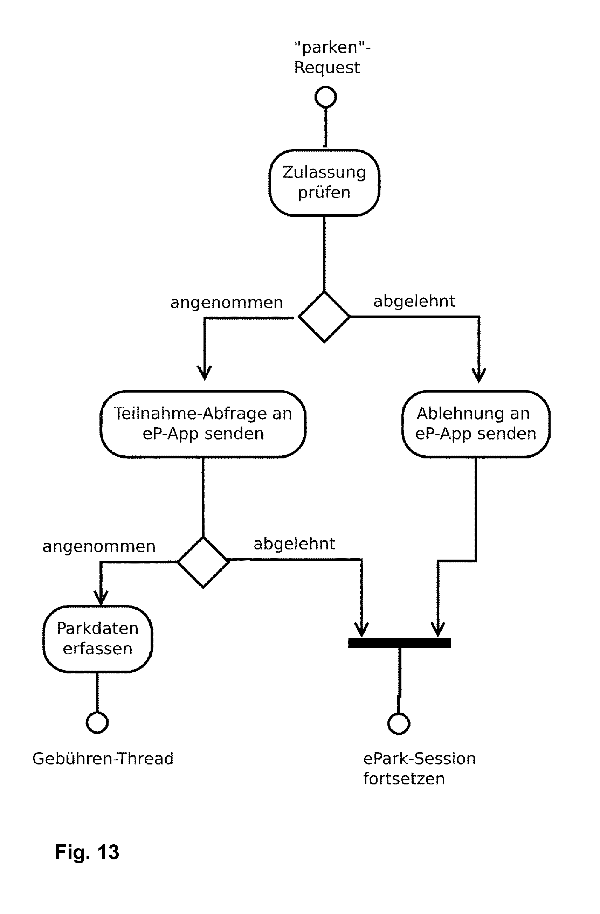

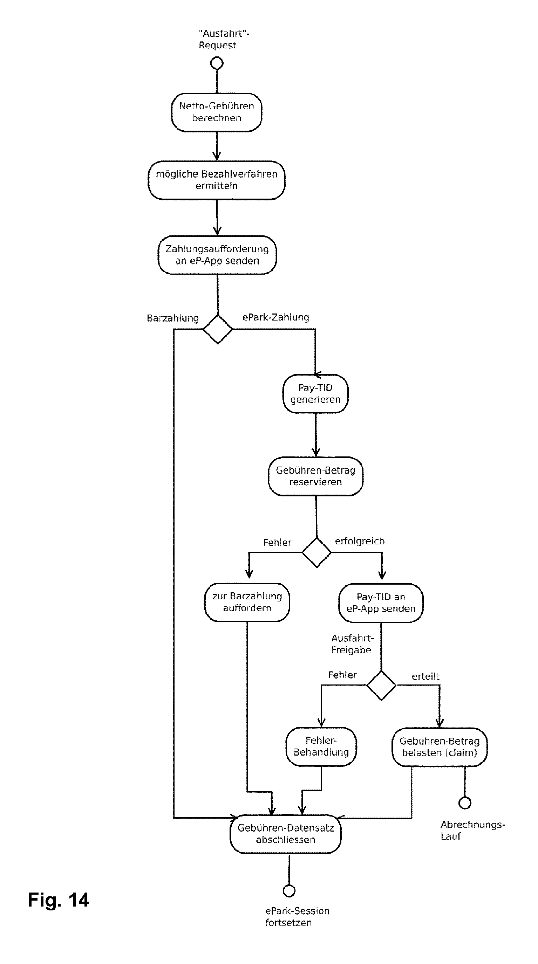

Die Fig. 12 bis 14 zeigen Aktivitätsdiagramme für das Frontend des ePark-Anbieters. Hierbei bezieht sich die Fig. 12 auf die Abläufe beim Login eines Nutzers, die Fig. 13 auf die Abläufe nach dem Start einer Parksession und die Fig. 14 auf die Abläufe bei der Vermittlung der Zahlung der Parkgebühren. Hinsichtlich der Abläufe sprechen die Diagramme für sich.

Das Frontend 7 des ePark-Anbieters ist ein zentraler Baustein des Parkkonzeptes gemäß der Erfindung. Seine wesentlichsten Aufgaben sind die Authentisierung der Nutzer, die Bereitstellung eines Internet-Portals für Kunden und Anbieter sowie die Verwaltung und Speicherung der Parksession-Daten. Das System besteht aus mindestens einem Internetserver, einer Anwendungs-Software und einer Datenbank. Betreiber des Frontends 7 werden in der Regel Anbieter sein, die ähnliche Plattformen für andere Internet-Dienste bereitstellen (Web-Shops, Firmen-Portale und dergleichen) und daher über ein eigenes Backend zur Kundenverwaltung und als Schnittstelle zu externen Partnern (zum Beispiel Payment-Service-Provider) verfügen.

Der Kunde kann für den Zugang zum Frontend einen Internet-Browser (insbesondere für die Anmeldung als Nutzer des Verfahrens und zur Pflege der ihn betreffenden Daten) oder die Programmanwendung 3 (eP-App) nutzen. Als Zugriffsschutz dienen die über ein Vertragsverhältnis geregelten Anmelde- und Nutzungsbedingungen beim Dienste-Anbieter. Für eine aktuelle Kosten-/Parkgebühren-Übersicht und zur Pflege der kundeneigenen Daten stellt der ePark-Anbieter eine Internetsite zur Verfügung die mit anderen Dienstleistungen kombiniert werden kann. Die Anwendungs-Software unterscheidet zwischen einer Lese-Session (zum Beispiel Abruf der Kostenübersicht) und einer semipermanenten Parksession. In einer Parksession wird für jeden Parkvorgang ein Gebühren-Thread durchlaufen. Über einen Abrechnungslauf, der durch elektronische, ein Backend 9 umfassende Einrichtungen 6 des ePark-Anbieters gesteuert wird, erfolgt das Clearing mit den Payment-Partnern, das heißt einem Payment-Service-Provider (PSP) oder einem Clearing-Partner des Nutzers.

Nach dem Login am Internetserver des Frontends 7 wird an Hand der eingegangenen Daten von einer durch das Frontend 7 verarbeiteten Software entschieden, ob es sich um eine Lese- oder Parksession handelt. Eine Parksession bleibt so lange bestehen bis sich der Nutzer erfolgreich vom System abgemeldet hat. Dies ist nur möglich, wenn keine offenen, nicht abgerechneten Parkvorgänge vorliegen. Verliert eine eP-App die Verbindung zu ihrer On-Board-Einheit 1 wird kein expliziter Logout durchgeführt. Kommt die Verbindung wieder zustande erfolgt ein Login-Versuch am Frontend 7 des ePark-Anbieters. Über die dort vorhandenen Session-Daten wird die Parksession fortgesetzt.

Beginnt ein Nutzer einen Parkvorgang erhält das Frontend 7 des ePark-Anbieters über die eP-App einen "parken"-Request und prüft an Hand von vorgegebenen Regeln, ob für diesen Parkvorgang das Bezahlen entsprechend dem erfindungsgemäßen Verfahren (ePark-Verfahren) zugelassen werden kann. Eine negative Entscheidung wird dem Nutzer durch die Programmanwendung 3 (eP-App) an seiner Interfaceeinrichtung 2 angezeigt und die Parksession fortgesetzt. Gleiches gilt für den Fall, dass sich der Nutzer sich dafür entscheidet, bei diesem Parkvorgang nicht am ePark-Verfahren teilzunehmen obwohl dies möglich wäre.

Nimmt der Nutzer jedoch das Angebot an werden im Frontend 7 des ePark-Anbieters alle relevanten Daten zum Parkvorgang gespeichert, die Parksession als "ist geparkt" gekennzeichnet und ein Thread zur Gebührenerfassung gestartet. Fährt der Nutzer mit seinem Fahrzeug wieder aus der zur Nutzung des erfindungsgemäßen Verfahrens eingerichteten Parkanlage heraus, wird das noch vor dem Passieren der Schranke durch die On-Board-Einheit 1 seines Kraftfahrzeugs erkannt und das Frontend 7 des ePark-Anbieters erhält einen "parken beenden" Request.

Auf Grundlage der für den Kunden hinterlegten Daten wird ein zu zahlender Netto-Betrag ermittelt und eine Liste der möglichen Bezahlverfahren (Kreditkarte, Lastschrift, Handy-Konto, Gutschein-Karte und dergleichen) erstellt. Diese Daten werden zusammen mit einer Zahlungsaufforderung an die eP-App gesendet. Wählt der Nutzer die stets mit angebotene Option der Barzahlung wird der Gebühren-Datensatz mit einem entsprechenden Merkmal gekennzeichnet und abgeschlossen. Die weitere Abrechnung erfolgt über die Backendeinrichtungen 8 der Parkanlage. Der Gebühren-Thread wird beendet und die Parksession im "nicht geparkt"-Status fortgesetzt.

Hat sich der Nutzer für eines der anderen Bezahlverfahren entschieden wird von einer auf dem Frontend 7 des ePark-Anbieters ablaufenden Software eine Pay-TID generiert und beim für dieses Bezahlverfahren zuständigen Payment-Service-Provider (PSP) der zu zahlende Betrag reserviert. Ist keine Reservierung möglich, zum Beispiel wegen fehlender Kontendeckung, aufgebrauchtem Guthaben oder aus technischen Gründen, wird der Nutzer zur Barzahlung aufgefordert und der Fehlergrund im Gebühren-Datensatz gespeichert. Der Gebühren-Thread wird als Barzahlung abgeschlossen. Konnten die Parkgebühren erfolgreich beim Payment-Service-Provider (PSP) reserviert werden, gibt das Frontend 7 die Pay-TID an die eP-App weiter die über ihre Schnittstellen zur On-Board-Einheit 1 und zur Ausfahrtkontrolleinrichtung 5 der Parkanlage dafür sorgt, dass die Ausfahrt frei gegeben werden kann. Über die eP-App erhält die Software auf dem Frontend 7 des ePark-Anbieters auch die Information, dass die Ausfahrt tatsächlich frei gegeben wurde. Dieses Signal führt dazu, dass das Konto des Nutzers beim PSP mit dem fälligen Betrag endgültig belastet wird. Der Gebühren-Thread wird beendet, die Parksession bis zum Logout oder einem weiteren Parkvorgang fortgesetzt und der Gebühren-Datensatz bis zu einem später stattfindenden Abrechnungslauf gespeichert.

## Patentansprüche

1. Verfahren zur Bezahlung von Parkgebühren durch Abwicklung eines die Bezahlung dafür erhobener Gebühren einschließenden Parkvorgangs in einer mit einer Kontrolleinrichtung (4) für die Zufahrt und einer Kontrolleinrichtung (5) für die Ausfahrt ausgestatteten Parkanlage, wobei das Verfahren von einem Nutzer nach einer Anmeldung bei einem Parkdienstanbieter nutzbar ist, wobei die Zu- und Ausfahrtskontrolle sowie die Bezahlung durch einen Betreiber der Parkanlage für das Einstellen eines Kraftfahrzeugs erhobener Gebühren auf der Grundlage einer eindeutigen ID einer in die Fahrzeugelektronik integrierten oder in dem Kraftfahrzeug festgelegten, mit Sende- und Empfangsmitteln für die drahtlose Kommunikation ausgestatteten On-Board-Einheit (1) erfolgt, **dadurch gekennzeichnet, dass** Bezahlung der Parkgebühren internetbasiert erfolgt, indem
- die ID durch eine mit der On-Board-Einheit (1) gekoppelte, Sende- und Empfangsmittel für die drahtlose Kommunikation aufweisende sowie internetfähige Interfaceeinrichtung (2) über das Internet an ein Frontend (7) des Parkdienstanbieters übertragen wird,
- bei der Einfahrt in die und bei der Ausfahrt aus der Parkanlage zwischen der On-Board-Einheit (1) und den ebenfalls mit Sende- und Empfangsmitteln zur drahtlosen Kommunikation ausgestatteten Kontrolleinrichtungen (4, 5) ein Datenaustausch unter Übertragung der ID an die Kontrolleinrichtungen (4, 5) erfolgt,
- durch die Interfaceeinrichtung (2) in Zuordnung zu der ID an das Frontend (7) des Parkdienstanbieters zumindest Angaben zur Identifikation der Parkanlage und zu Parkgebühren oder zur Parkdauer übertragen werden, die von Backendeinrichtungen (8) der Parkanlage zur Verfügung gestellt und beim Datenaustausch mit den Kontrolleinrichtungen (4, 5) von diesen an die mit der Interfaceeinrichtung (2) gekoppelte On-Board-Einheit (1) übermittelt werden,
- elektronische Einrichtungen (6) des Parkdienstanbieters in Interaktion mit elektronischen Einrichtungen (10) eines Zahlungsdienstleisters die Begleichung für das Parken zu zahlender Beträge veranlassen.

2. Verfahren nach Anspruch 1, **dadurch gekennzeichnet, dass** die Berechnung und Bezahlung der Parkgebühren einzeln direkt für jeden Parkvorgang oder pauschal für eine festgelegte Anzahl von Parkvorgängen oder/und einen festgelegten Nutzungszeitraum erfolgt.

3. Verfahren nach Anspruch 1 oder 2, **dadurch gekennzeichnet, dass** sich die Abwicklung eines Parkvorgangs vollzieht, indem
a.) die mit einer Verarbeitungseinrichtung ausgestattete Interfaceeinrichtung (2) durch eine in der Interfaceeinrichtung (2) ablaufende Programmanwendung (3) mit der On-Board-Einheit (1) funktional gekoppelt wird,
b.) nach erfolgter Kopplung der On-Board-Einheit (1) und der Interfaceeinrichtung (2) durch die Programmanwendung (3) ein Login bei dem Frontend (7) des Parkdienstanbieters durchgeführt wird, bei dem sich der Nutzer gegenüber dem Frontend (7) authentifiziert, die ID der On-Board-Einheit (1) an das Frontend (7) übermittelt und zu dieser in einer Datenbank des Frontends (7) ein aktueller Parkdatensatz angelegt wird,
c.) die On-Board-Einheit (1) bei der Anfahrt auf eine zur Durchführung des Verfahrens eingerichtete Parkanlage ihre ID an die Kontrolleinrichtung (4) für die Zufahrt übermittelt, sobald sich die Sende- und Empfangsmittel für die drahtlose Kommunikation der On-Board-Einheit (1) und der Kontrolleinrichtung (4) zueinander in Reichweite befinden,
d.) die Kontrolleinrichtung (4) für die Zufahrt die ID der On-Board-Einheit (1) an Backendeinrichtungen (8) der Parkanlage weiterleitet, welche die ID zusammen mit einem Zeitstempel zur Einfahrtzeit speichern sowie den Zeitstempel und eine die Parkanlage eindeutig identifizierende Kennung über die Kontrolleinrichtung (4) an die On-Board-Einheit (1) übertragen,
e.) die mit der On-Board-Einheit (1) gekoppelte Interfaceeinrichtung (2) deren ID zusammen mit dem Zeitstempel und der Kennung der Parkanlage an das Frontend (7) des Parkdienstanbieters überträgt, welches die Berechtigung des Nutzers zur Verwendung des Verfahrens in der Parkanlage überprüft,
f.) bei positivem Ergebnis der Prüfung gemäß e.) dem Nutzer das Passieren der Kontrolleinrichtung (4) für die Zufahrt und das Einstellen des Kraftfahrzeugs in der Parkanlage ermöglicht wird und das, hierüber durch die in der Interfaceeinrichtung (2) ablaufende Programmanwendung (3) durch Übertragung einer Mitteilung unterrichtete Frontend (7) des Parkdienstanbieters in dem unter der ID der On-Board-Einheit (1) angelegten Parkdatensatz ein Merkmal "ist geparkt" setzt,
g.) die On-Board-Einheit (1) bei der späteren Ausfahrt aus der Parkanlage ihre ID an die Kontrolleinrichtung (5) für die Ausfahrt übermittelt, sobald sich die Sende- und Empfangsmittel für die drahtlose Kommunikation der On-Board-Einheit (1) und der Kontrolleinrichtung (5) zueinander in Reichweite befinden,
h.) die Kontrolleinrichtung (5) für die Ausfahrt die ID der On-Board-Einheit (1) an die Backendeinrichtungen (8) der Parkanlage weiterleitet, welche auf der Grundlage des zusammen mit dieser ID abgespeicherten Zeitstempels zur Einfahrtzeit die zu entrichtenden Parkgebühren berechnen und über die Kontrolleinrichtung (5) an die On-Board-Einheit (1) übermitteln,
i.) die mit der On-Board-Einheit (1) gekoppelte Interfaceeinrichtung (2) veranlasst durch die von ihr verarbeitete Programmanwendung (3) die ID der On-Board-Einheit (1) zusammen mit dem Betrag der zu entrichtenden Parkgebühr an das Frontend (7) des Parkanbieters übermitteln,
j.) das Frontend (7) das Merkmal "ist geparkt" in dem unter der ID gespeicherten Parkdatensatz löscht und die ID zusammen mit dem Betrag der zu entrichtenden Parkgebühr an ein Backend (9) der elektronischen Einrichtungen (6) des Parkdienstanbieters weiterleitet, welches in Interaktion mit elektronischen Einrichtungen (10) eines Zahlungsdienstleisters die Begleichung des zu zahlenden Betrags durch den Nutzer veranlassen, wobei
im Falle eines negativen Ergebnisses der Prüfung gemäß e.) das Verfahren mit diesem Verfahrensschritt abgebrochen wird.

4. Verfahren nach Anspruch 3, **dadurch gekennzeichnet, dass** der Nutzer bei positivem Ergebnis der Prüfung gemäß e.) über die Interfaceeinrichtung (2) zunächst gefragt wird, ob er das Verfahren für den beabsichtigten Parkvorgang nutzen möchte und dass im Falle eines Verneinens dieser Anfrage durch den Nutzer das Verfahren mit diesem Verfahrensschritt abgebrochen wird.

5. Verfahren nach Anspruch 3 oder 4, **dadurch gekennzeichnet, dass** es dem Nutzer auch ermöglich ist, die aufgrund der Parkdauer fällig werdenden Parkgebühren innerhalb der Parkanlage in bar zu entrichten, wobei im Schritt i.) dies durch die Kontrolleinrichtung (5) für die Ausfahrt festgestellt und veranlasst durch diese im Schritt j.) über die On-Board-Einheit (1) und die mit ihr gekoppelte Interfaceeinrichtung (2) ein Signal "Barzahlung" an das Frontend (7) übertragen und im Ergebnis dessen in dem Parkdatensatz ein dies kenntlich machender Eintrag vermerkt wird.

6. System zur Abwicklung eines die Bezahlung dafür erhobener Gebühren einschließenden Parkvorgangs in einer Parkanlage, mit einer eine Kontrolleinrichtung (4) für die Zufahrt, eine Kontrolleinrichtung (5) für die Ausfahrt und elektronische Backendeinrichtungen (8) aufweisenden Parkanlage und mit zur Nutzung des Systems eingerichteten Kraftfahrzeugen, welche mit einer in die Fahrzeugelektronik integrierten oder in dem Kraftfahrzeug festgelegten, eine eindeutige ID aufweisenden On-Board-Einheit (1) ausgestattet, wobei die Kontrolleinrichtungen (4, 5) und die On-Board-Einheit (1) über Sende- und Empfangsmittel für die drahtlose Kommunikation verfügen, **dadurch gekennzeichnet, dass** das System ferner umfasst
- eine mit der On-Board-Einheit (1) eines jeweiligen Kraftfahrzeugs gekoppelte, ebenfalls Sende- und Empfangsmittel für die drahtlose Kommunikation sowie eine Verarbeitungseinheit aufweisende, internetfähige Interfaceeinrichtung (2),
- ein in der Verarbeitungseinheit der Interfaceeinrichtung (2) ablaufendes Softwareprogramm mit einer Programanwendung (3),
- elektronische Einrichtungen (6) eines Parkdienstanbieters mit einem Frontend (7) für eine über das Internet abgewickelte Kommunikation mit Interfaceeinrichtungen (2) für die Nutzung des Systems eingerichteter Kraftfahrzeuge und mit einer Datenbank zur Verwaltung von Kundendaten sowie zur Speicherung von Datensätzen zu Parkvorgängen in Zuordnung zur ID der On-Board-Einheit (1) des jeweiligen Kraftfahrzeugs eines das System verwendenden Nutzers.

7. System nach Anspruch 6, **dadurch gekennzeichnet, dass** die On-Board-Einheit (1) und die Interfaceeinrichtung (2) eine gemeinsame in die Kraftfahrzeugelektronik integrierte oder in dem Kraftfahrzeug festgelegte Einheit ausbilden.

8. System nach Anspruch 6, **dadurch gekennzeichnet, dass** dieses im Hinblick auf die On-Board-Einheit (1) und die Interfaceeinrichtung (2) modular ausgebildet ist, wobei diese physisch unabhängige voneinander abgesetzte Einheiten ausbilden, die zur Ausführung des Verfahrens gemäß Anspruch 1 durch die in der Verarbeitungseinheit der Interfaceeinrichtung (2) ablaufende Programmanwendung (3) logisch und über ihre Sende- und Empfangsmittel verbindungsmäßig miteinander gekoppelt werden.

9. System nach Anspruch 8, **dadurch gekennzeichnet, dass** es sich bei den Sende- und Empfangsmitteln, über welche die On-Board-Einheit (1) und die Interfaceeinrichtung (2) miteinander kommunizieren um Funksende- und Empfangsmittel handelt, zwischen denen eine Bluetooth-Verbindung oder eine WLAN-Verbindung besteht.

10. System nach Anspruch 8, **dadurch gekennzeichnet, dass** es sich bei der Kommunikationsverbindung zwischen der On-Board-Einheit (1) und der Interfaceeinrichtung (2) um eine Infrarotverbindung handelt.

11. System nach einem der Ansprüche 6 bis 10, **dadurch gekennzeichnet, dass** es sich bei den Sende- und Empfangsmitteln der Kontrolleinrichtungen (4, 5) der Parkanlage sowie bei den Sende- und Empfangsmitteln, über welche die On-Board-Einheit (1) mit den Kontrolleinrichtungen (4, 5) kommuniziert um Funksende- und Empfangsmittel handelt.
